# EUROPÄISCHE PATENTSCHRIFT

(11) **EP 2 256 825 B1**
(45) Veröffentlichungstag und Bekanntmachung des Hinweises auf die Patenterteilung: **06.09.2017**
(21) Anmeldenummer: 10005520.1
(22) Anmeldetag: 27.05.2010
(51) Int. Cl.: H02S 40/34

(54) **Anschluß-oder Überbrückungsdose mit Lötmitteldepot**
Connection or bridging socket with soldering agent reservoir
Boîtier de connexion ou intermédiaire avec dépot de soudure

(30) Priorität: 27.05.2009 DE 102009022943; 27.05.2009 DE 102009022944
(43) Veröffentlichungstag der Anmeldung: 01.12.2010
(73) Patentinhaber: Yamaichi Electronics Deutschland GmbH, 85609 Aschheim-Dornach (DE)
(72) Erfinder: Eberle, Erwin, 80687 München (DE); Quiter, Michael, 57482 Wenden (DE)
(74) Vertreter: Müller-Boré & Partner Patentanwälte PartG mbB

(56) Entgegenhaltungen:
- EP-A2- 1 589 588
- EP-A2- 1 628 511
- EP-A2- 2 058 867
- DE-A1-102007 031 351

## Beschreibung

Die vorliegende Erfindung betrifft eine Anschlußdose, eine Überbrückungsdose, ein Solarpaneel und ein Verfahren zum Herstellen eines Solarpaneels.

Herkömmliche Solarmodule zur Erzeugung elektrischer Energie aus Sonnenlicht umfassen eine oder mehrere einzelne Solarzellen. Je nach gewünschter vom Solarmodul zur Verfügung zu stellenden Spannung und/oder Stromstärke können einzelne Solarzellen innerhalb des Moduls parallel und/oder in Reihe geschaltet und damit zu Solarzellengruppen zusammengefaßt werden. Die Solarzellengruppen können weiter zu einem flachen Solarmodul zusammengefaßt werden.

Die elektrischen Anschlüsse der Solarzellengruppen des Solarmoduls werden nach außen geführt. Bei partieller Verringerung der Bestrahlungsintensität durch Sonnenlicht auf einzelne Solarzellen bzw. Solarzellengruppen oder auf verschiedene Solarmodule, beispielsweise durch Verschmutzung oder Schattenwurf, können unter anderem folgende Effekte auftreten:
(1) Eine (gleichmäßige) Verringerung der Bestrahlungsintensität innerhalb der zusammen geschalteten Solarzellengruppen führt zu einer Leistungsverminderung der jeweiligen Solarzellengruppe bzw. des jeweiligen Solarmoduls.
(2) Durch eine partielle Abschattung einer Solarzelle innerhalb einer Solarzellengruppe wirkt diese abgeschattete Solarzelle als Sperrdiode bzw. Widerstand innerhalb des Stromkreises der Solarzellengruppe, was zum einen dazu führen kann, daß die gesamte Solarzellengruppe keine elektrische Energie mehr liefern kann und zum anderen zu einer Beschädigung der abgeschatteten Solarzelle und damit zum dauerhaften Ausfall der Solarzellengruppe führen kann.

In jedem Fall können zwischen den herausgeführten Anschlüssen der Solarzellengruppen eines Solarmoduls, je nach Bestrahlungsintensität auf die einzelnen Solarzellen, unterschiedliche Spannungen anliegen. Eine Reihenschaltung der Solarzellengruppen durch entsprechende Schaltung der nach außen geführten Anschlüsse führt analog zu den oben genannten Problemen.

Um die mit der unterschiedlichen Bestrahlungsintensität der Solarzellen verbundenen Probleme zu vermeiden, werden herkömmlich sogenannte Bypass-Dioden verwendet, die elektrisch antiparallel zu den Solarzellengruppen geschaltet werden. Diese Bypass-Dioden haben die Wirkung, daß der Stromfluß durch das Solarmodul an Solarzellengruppen, welche eine nur geringe Leistung liefern, vorbei geleitet wird, d.h. die Anschlüsse dieser Solarzellengruppe eines Solarmoduls werden durch die Bypass-Diode kurz geschlossen und die entsprechende Solarzellengruppe dadurch überbrückt. Somit liefert eine solche Solarzellengruppe zwar keinen Anteil mehr zur Gesamtleistung des Solarmoduls, der Gesamtstromfluß durch das Solarpaneel ist jedoch im wesentlichen ungehindert und eine Beschädigung einzelner Solarzellen wird verhindert.

Solarpaneele umfassen daher neben dem Solarmodul in der Regel eine elektrische Anschlußdose mit einer Vielzahl von Kontaktvorrichtungen und einer entsprechend angepaßten Anzahl von Bypass-Dioden. Ferner sind die Solarzellen in einem Solarmodul in der Regel durch flache dünne Leiterbänder miteinander verbunden. Diese Leiterbänder werden aus dem Solarmodul heraus geführt und manuell mit den in der Anschlußdose angeordneten Kontaktvorrichtungen kontaktiert, so daß einerseits der erzeugte Strom aus dem Solarmodul heraus geführt werden kann und andererseits die Solarzellen falls nötig überbrückt werden können. Das mit der Anschlußdose versehene Solarmodul wird als Solarpaneel bezeichnet.

Die Druckschrift EP 1 589 588 A2 offenbart eine Anschlußdose für ein Solarmodul mit einer Vielzahl von elektrische Kontaktvorrichtungen zum Kontaktieren elektrischer Leiter des Solarmoduls.

Die Druckschrift EP 2 058 867 A2 offenbart eine Anschlußdose für ein Solarmodul, welche mittels zweier Lötfahnen mit dem Solarmodul verbindbar ist.

Die Druckschrift DE 10 2007 031 351 A1 offenbart einen steckbaren Anschlußverbinder um elektrische Leiter mit einem Solarmoduls elektrisch zu verbinden.

Es ist Aufgabe der Erfindung eine Anschlußdose, eine Überbrückungsdose, ein Solarpaneel und ein Verfahren zum Herstellen eines Solarpaneels, bereitzustellen, welche eine einfache, materialsparende Montage ermöglichen.

Die Aufgabe wird durch die unabhängigen Ansprüche gelöst. Bevorzugte Ausführungsvarianten und/oder Ausführungsformen sind Gegenstand der abhängigen Ansprüche.

### Anschlußdose gemäß einem Aspekt

Ein Aspekt der vorliegenden Erfindung betrifft eine Anschlußdose für ein Solarmodul, umfassend:
- ein Anschlußdosenbefestigungselement,
- zumindest einen Verbinder mit einem Anschlußpol oder zumindest ein mit der Anschlußdose verbundenes Kabel mit zumindest einer Leitungsader,
- zumindest eine Anschlußdosenkontakteinrichtung mit
   -- zumindest zwei Leiterkontakten,
   -- zumindest einer Diode, welche zwei der Leiterkontakte elektrisch verbindet und
   -- zumindest einem Anschlußkontakt, der mit dem Anschlußpol oder der zumindest einen Leitungsader kontaktiert ist,
wobei zumindest einer der zumindest zwei Leiterkontakte ein Lötmitteldepot aufweist.

Das Lötmitteldepot umfaßt ein Lötmittel bzw. ist durch ein Lötmittel ausgebildet. Das Lötmittel ist vorzugsweise eine Metall-Legierung, welche Blei, Zinn, Silber und/oder Kupfer enthalten kann, oder weiter vorzugsweise ein elektrisch leitfähiges thermoplastisches Polymer. Durch das Lötmittel ist ein Leiterkontakt mit einem zugeordneten elektrischen Leiter elektrisch und mechanisch verbindbar, indem sich das Lötmittel in geschmolzenem Zustand mit diesen verbindet und anschließend erstarrt. Der Schmelzpunkt des Lötmittels ist niedriger als der Schmelzpunkt des Leiterkontaktes und ist bevorzugt kleiner als 450°C, weiter bevorzugt kleiner als 300°C und insbesondere für elektrisch leitfähige Polymere kleiner als 250°C.

Weiter bevorzugt kann das Lötmitteldepot neben dem Lötmittel ein Flußmittel aufweisen. Ein Flußmittel erleichtert vorteilhafterweise den Schmelzvorgang und die Handhabung des geschmolzenen Lötmittels. Insbesondere entoxidiert das Flußmittel bei der Erwärmung des Lötmitteldepot die Oberflächen des Leiterkontaktes und verhindert die erneute Oxidbildung vor und während des Lötvorgangs durch Bildung einer flüssigen Schutzschicht.

Vorteilhafterweise ist ein elektrischer Leiter besonders einfach mit dem zugeordneten Leiterkontakt verbindbar, da der elektrische Leiter lediglich durch Anordnen an den Leiterkontakt und durch Wärmeeinwirkung auf das Lötmittel bzw. das Lötmitteldepot mittels einer Wärmequelle mit dem Leiterkontakt kontaktiert werden kann. Insbesondere kann das Erwärmen des Lötmitteldepots mittelbar über eine Erwärmung des elektrischen Leiters oder des Leiterkontaktes erfolgen. Bevorzugt ist die Wärmequelle ein Lötkolben, so daß der elektrische Leiter mittels des Lötkolbens mit Wärme und einer gegen der zugeordneten Leiterkontakt wirkenden Kraft beaufschlagbar ist. Vorteilhafterweise ist der elektrische Leiter besonders einfach, insbesondere automatisiert, mit dem Leiterkontakt verbindbar. Alternativ oder zusätzlich zu dem Lötkolben kann auch eine andere bzw. weitere Wärmequelle zur Erwärmung des Lötmittels bzw. des Lötmitteldepots verwendet werden, wie beispielsweise eine Heizzange, ein Heizgebläse, eine Lötlampe und so weiter.

Der Begriff "Kontakt" im Sinne der vorliegenden Erfindung beinhaltet insbesondere elektrischen und/oder mechanischen Kontakt, so daß eine Anschlußdosenkontakteinrichtung ausgelegt ist, einen elektrischen und/oder einen mechanischen Kontakt mit den elektrischen Leitern der Solarzelle herzustellen. Der Kontakt erfolgt dabei durch das Verlöten mittels des Lötmitteldepots.

Der Verbinder kann einstückig mit der Eingangs- und/oder Ausgangsanschlußdose ausgebildet sein. Beispielsweise kann die Anschlußdose in einem Spritzgußverfahren hergestellt sein, wobei der Verbinder gleichzeitig mit der Anschlußdose hergestellt wird. Es ist auch möglich, daß die Anschlußdose und der Verbinder in getrennten Verfahrensschritten hergestellt werden und der Verbinder anschließend an der Anschlußdose angeordnet wird, beispielsweise daran festgeklebt wird. Vorteilhafterweise ist eine elektrische Kontaktierung des Solarpaneels über die Anschlußdose mittels des oder der elektrischen Verbinder(s) besonders einfach herstellbar, wobei die Anschlußdose kompakt ausgebildet sein kann. Ein Verbinder stellt bevorzugt lediglich jeweils einen Anschlußpol bereit, d.h. einen Pluspol oder einen Minuspol des Solarpaneels.

Die Anschlußdose kann zumindest ein Kabel mit einer oder mehreren Leitungsader(n) aufweisen, der/die mit der Anschlußdosenkontakteinrichtung kontaktiert ist/sind. Beispielsweise kann die Anschlußdose in einem Spritzgußverfahren hergestellt sein, wobei die Ummantelung des Kabels beim Herstellen der Anschlußdose mit der Anschlußdose verbunden wird. Vorteilhafterweise kann die elektrische Kontaktierung des Solarpaneels mittels des oder der Kabel besonders betriebssicher hergestellt werden, wobei insbesondere eine erhöhte Feuchtigkeitsdichtigkeit in einfacher Weise erreicht werden kann. Hierbei kann eine Zugentlastung des Kabels fest mit der Anschlußdose verbunden, insbesondere verklebt sein. Analog zu der vorangehenden Beschreibung stellt ein Kabel bevorzugt lediglich jeweils einen Anschlußpol bereit, d.h. einen Pluspol oder einen Minuspol des Solarpaneels, so daß ein Kabel insbesondere lediglich eine Leitungsader aufweist.

Besonders bevorzugt können zur Kontaktierung bzw. zum Anschluß des Solarpaneels ein Verbinder und ein Kabel an der Anschlußdose vorgesehen sein. Insbesondere kann das Kabel an seinem zur Anschlußdose distalen Ende weiter einen komplementären Verbinder aufweisen, der ausgelegt ist, mit dem Verbinder der Anschlußdose eines zweiten Solarpaneels verbunden bzw. kontaktiert zu werden.

Die Leiterkontakte der Anschlußdosenkontakteinrichtung sind insbesondere ausgelegt mit Leiterbändern zu kontaktieren. Mit anderen Worten umfassen die Leiterkontakte insbesondere einen im wesentlichen ebenen Bereich, der ausgelegt ist, im wesentlichen formschlüssig mit einem elektrischen Leiter, insbesondere einem Leiterband, zu kontaktieren.

Der Begriff "im wesentlichen" kann im Sinne der vorliegenden Erfindung eine Abweichung von einer gewünschten Eigenschaft beschreiben. Insbesondere kann dies eine geringe Abeichung, d.h. ohne signifikante Änderung der gewünschten Eigenschaft sein, beispielsweise, falls die gewünschte Eigenschaft als Solleigenschaft angesehen wird, kann "im wesentlichen" ein Abweichung von dieser Solleigenschaft um weniger als etwa 20%, weniger als etwa 10%, weniger als etwa 5%, weniger als etwa 2%, insbesondere weniger als etwa 1% beschreiben.

### Bevorzugte Ausführunctsformen der Anschlußdose

Vorzugsweise ist das Lötmitteldepot mittels einer adhäsiven Verbindung an dem Leiterkontakt befestigt. Insbesondere ist das Lötmitteldepot an dem Leiterkontakt festgelötet. Alternativ oder zusätzlich kann das Lötmitteldepot auch an dem Leiterkontakt festgeklemmt sein, beispielsweise durch Einpressen des Lötmitteldepots in eine Ausnehmung und/oder durch Einklemmen des Lötmitteldepots zwischen zwei Haltebereichen des Leiterkontaktes. Bevorzugt ist zumindest einer dieser Haltebereiche biegsam ausgeführt, um das Lötmitteldepot festzulegen. Weiter bevorzugt ist zumindest einer der Haltebereiche rückstellfähig ausgebildet, so daß der Haltebereich beim Anbringen des Lötmitteldepots elastisch verformt wird und eine Haltekraft auf das Lötmitteldepot ausübt, wenn das Lötmitteldepot an dem Leiterkontakt montiert ist.

Vorzugsweise umfaßt die Anschlußdose
- genau einen Verbinder mit einem Anschlußpol oder genau ein mit der Anschlußdose verbundenes Kabel mit genau einer Leitungsader umfaßt und
- genau eine Anschlußdosenkontakteinrichtung mit
   -- genau zwei Leiterkontakten,
   -- genau einem Anschlußkontakt, der mit dem einen Anschlußpol oder der einen Leitungsader kontaktiert ist, und
   -- einer Diode, welche die zwei Leiterkontakte elektrisch verbindet,
umfaßt.

Je nach Verwendung der Anschlußdose entspricht die Anschlußdose einer Eingangsanschlußdose oder einer Ausgangsanschlußdose. Jede Anschlußdose stellt somit genau einen Pol des Solarpaneels bereit, wobei die Stromflußrichtung derart definiert ist, daß die Ausgangsanschlußdose den Pluspol und die Eingangsanschlußdose den Minuspol bereit stellt, wenn das Solarpaneel in betriebsmäßigem Gebrauch ist.

Weiter vorzugsweise weist die Ausgangsanschlußdose genau ein Kabel mit genau einer Leitungsader auf, die mit dem als Leitungsaderkontakt ausgebildeten Anschlußkontakt der Anschlußdosenkontakteinrichtung der Ausgangsanschlußdose kontaktiert ist und die Eingangsanschlußdose weist genau einen elektrischen Verbinder mit genau einem Anschlußpol auf, der mit dem Anschlußkontakt der Anschlußdosenkontakteinrichtung der Eingangsanschlußdose kontaktiert ist. Es versteht sich das die Eingangsanschlußdose entsprechend der voranstehend beschriebenen Ausgangsanschlußdose und die Ausgangsanschlußdose entsprechend der voranstehend beschriebenen Eingangsanschlußdose ausgebildet sein kann.

Die im folgenden beschriebenen Eigenschaften gelten ebenfalls für die als Eingangsanschlußdose und/oder Ausgangsanschlußdose ausgebildete Anschlußdose.

Vorzugsweise umfaßt das Anschlußdosenbefestigungselement eine Anschlußdosengrundplatte. Bevorzugt ist die Anschlußdosengrundplatte einstückig, insbesondere aus einem Polymer bzw. einem elektrisch nicht leitenden Kunststoff, ausgebildet.

Eine Anschlußdosengrundplatte ist besonders vorzugsweise dazu ausgelegt, um mit einem Solarmodul verklebbar zu sein. Insbesondere ist die Seite der Anschlußdosengrundplatte, die ausgelegt ist an dem Solarmodul befestigt zu sein, im wesentlichen eben ausgebildet. Insbesondere kann ein Haftmittel auf der Anschlußdosengrundplatte aufgetragen sein. Das Haftmittel kann beispielsweise einen Haftkleber und/oder einen Schmelzkleber und/oder ein Klebeband, usw. umfassen. Weiter vorzugsweise umfaßt eine Anschlußdosengrundplatte zumindest einen Öffnungsbereich. Insbesondere kann jedem Leiterkontakt ein Öffnungsbereich zugeordnet sein.

Vorzugsweise weist die Anschlußdose einen Anschlußdosendeckel mit einer Einfüllöffnung auf. Insbesondere ist die Einfüllöffnung dazu ausgelegt, eine Extrusionsdüse für flüssiges Kunstharz zu kontaktieren und/oder aufzunehmen. Dazu ist die Einfüllöffnung insbesondere kegelförmig ausgebildet.

Vorzugsweise sind die zumindest zwei Leiterkontakte der zumindest einen Anschlußdosenkontakteinrichtung einstückig ausgebildet, wobei die zumindest eine Anschlußdosenkontakteinrichtung eine Sollbruchstelle aufweist, um die zwei Leiterkontakte zu dekontaktieren. Weiterhin vorzugsweise kann die Anschlußdosenkontakteinrichtung beispielsweise aus einem Metall oder einer Metallegierung ausgebildet sein.

Vorzugsweise sind die zwei Leiterkontakte der zumindest einen Anschlußdosenkontakteinrichtung mittels der Diode mechanisch miteinander verbunden. Dabei sind die zwei Leiterkontakte insbesondere derart mit der Diode verbunden, daß die Position der zwei Leiterkontakte zueinander durch die Diode fixiert ist. Die Verbindung zwischen der Diode und dem jeweiligen Leiterkontakt kann durch Schweißen, Löten, Kleben, Klemmen, Crimpen, usw. erfolgen.

Vorzugsweise ist der Anschlußkontakt der Anschlußdosenkontakteinrichtung mit einem der Leiterkontakte einstückig ausgebildet. Insbesondere besteht der Leiterkontakt aus einem Metallblech bzw. bestehen der Leiterkontakt und der Anschlußkontakt der Anschlußdosenkontakteinrichtung aus einem gemeinsamen Stück Metallblech.

Vorzugsweise ist die Diode der Anschlußdosenkontakteinrichtung eine SMD-Diode. Vorteilhafterweise ist aufgrund der flachen Bauweise der SMD-Diode ein verbesserter mechanischer Kontakt zwischen dem Leiterkontakt und der Diode ausgebildet. Weiter vorteilhafterweise ist der spezifische Wärmefluß aufgrund der vergrößerten Oberfläche der SMD-Diode gegenüber einer zylindrischen Koaxial-Diode bei gleicher Verlustleistung verringert, so daß die von der Diode ausgehende thermische Belastung der umliegenden Bauteile verringert ist.

### Überbrückungsdose gemäß einem Aspekt

Ein Aspekt der vorliegenden Erfindung betrifft eine Überbrückungsdose für ein Solarmodul, umfassend:
- ein Überbrückungsdosenbefestigungselement,
- eine Überbrückungsdosenkontakteinrichtung mit
   -- zwei Leiterkontakten und
   -- zumindest einer Diode, welche die zwei Leiterkontakte elektrisch verbindet,
wobei zumindest einer der Leiterkontakte ein Lötmitteldepot aufweist.

Weiter bevorzugt kann das Lötmitteldepot neben dem Lötmittel ein Flußmittel aufweisen. Weitere Eigenschaften und Vorteile des Lötmittels und des Flußmittels sind in Bezug auf die Anschlußdose beschrieben.

### Bevorzugte Ausführungsformen der Überbrückungsdose

Vorzugsweise ist das Lötmitteldepot mittels einer adhäsiven Verbindung an dem Leiterkontakt befestigt. Insbesondere ist das Lötmitteldepot an dem Leiterkontakt festgelötet. Alternativ oder zusätzlich kann das Lötmitteldepot auch an dem Leiterkontakt festgeklemmt sein, beispielsweise durch Einpressen des Lötmitteldepots in eine Ausnehmung und/oder durch Einklemmen des Lötmitteldepots zwischen zwei Haltebereichen des Leiterkontaktes. Bevorzugte Haltebereiche sind mit Bezug auf das Lötmitteldepot der Anschlußdose bereits beschrieben.

Vorzugsweise umfaßt das Überbrückungsdosenbefestigungselement ein an der Überbrückungsdosenkontakteinrichtung direkt angeordnetes Haftmittel, wobei die Überbrückungsdosenkontakteinrichtung mittels des Haftmittels an einem Solarmodul befestigbar ist. Insbesondere ist das Überbrückungsdosenbefestigungselement ein Haftmittel das direkt an der Überbrückungsdosenkontakteinrichtung angeordnet ist.

Beispielsweise ist die Überbrückungsdose grundplattenfrei, d.h., daß die Überbrückungsdose keine Grundplatte aufweist. Somit kann an dem Solarmodul die Überbrückungsdosenkontakteinrichtung angeordnet sein, und die Überbrückungsdosenkontakteinrichtung von einem Überbrückungsdosendeckel bedeckt sein.

Vorzugsweise umfaßt das Überbrückungsdosenbefestigungselement eine Überbrückungsdosengrundplatte. Beispielsweise ist an der Überbrückungsdosengrundplatte das Haftmittel angeordnet. Eine Überbrückungsdosengrundplatte ist besonders vorzugsweise dazu ausgelegt, um mit dem Solarmodul verklebbar zu sein.

Insbesondere ist die Seite der Überbrückungsdosengrundplatte, die ausgelegt ist an dem Solarmodul befestigt zu sein, im wesentlichen eben ausgebildet. Insbesondere kann ein Haftmittel auf der Überbrückungsdosengrundplatte aufgetragen sein. Das Haftmittel kann beispielsweise einen Haftkleber und/oder einen Schmelzkleber und/oder ein Klebeband, usw. umfassen. Weiter vorzugsweise umfaßt eine Überbrückungsdosengrundplatte zumindest einen Öffnungsbereich. Insbesondere kann jedem Leiterkontakt ein Öffnungsbereich zugeordnet sein.

Vorzugsweise weist die Überbrückungsdose einen Überbrückungsdosendeckel mit einer Einfüllöffnung auf. Insbesondere ist die Einfüllöffnung dazu ausgelegt, eine Extrusionsdüse für flüssiges Kunstharz zu kontaktieren und/oder aufzunehmen. Dazu ist die Einfüllöffnung insbesondere kegelförmig ausgebildet.

Vorzugsweise sind die zwei Leiterkontakte der Überbrückungsdosenkontakteinrichtung einstückig ausgebildet, wobei die Überbrückungsdosenkontakteinrichtung eine Sollbruchstelle aufweist, um die zwei Leiterkontakte zu dekontaktieren. Weiter vorzugsweise kann die Überbrückungsdosenkontakteinrichtung beispielsweise aus einem Metall oder einer Metallegierung ausgebildet sein.

Vorzugsweise sind die zwei Leiterkontakte der Überbrückungsdosenkontakteinrichtung mittels der Diode mechanisch miteinander verbunden. Dabei sind die zwei Leiterkontakte insbesondere derart mit der Diode verbunden, daß die Position der zwei Leiterkontakte zueinander durch die Diode fixiert ist. Die Verbindung zwischen der Diode und dem jeweiligen Leiterkontakt kann durch Schweißen, Löten, Kleben, Crimpen, usw. erfolgen.

Vorzugsweise ist die Diode der Überbrückungsdose eine SMD-Diode. Dadurch ergeben sich die in Bezug auf die Anschlußdose dargestellten Vorteile ebenfalls für die Überbrückungsdose.

### Solarpaneel gemäß einem Aspekt

Ein Aspekt der vorliegenden Erfindung betrifft ein Solarpaneel, umfassend:
- ein Solarmodul mit zumindest zwei elektrischen Leitern und
- zumindest eine erfindungsgemäße elektrische Anschlußdose,
wobei zwei der elektrischen Leiter des Solarmoduls jeweils mit einem zugeordneten Leiterkontakt der Anschlußdosenkontakteinrichtung mittels des Lötmitteldepots verlötet sind.

Das Solarmodul umfaßt zumindest eine spannungserzeugende Solarzelle bzw. Solarzellengruppe, welche zwei elektrische Leiter aufweist, die den Plus- und Minuspol der Solarzelle bilden. Auf einer Anschlußseite können die zumindest zwei elektrischen Leiter, insbesondere in Form dünner Leiterbänder, aus dem Solarmodul heraus geführt werden. Die "Anschlußseite bzw. -fläche" im Sinne der Erfindung beschreibt eine Seite bzw. Fläche, die insbesondere einer lichtaktiven Seite bzw. Fläche gegenüber liegt. In anderen Worten ist die lichtaktive Seite bzw. Fläche ausgelegt, Licht aufzunehmen bzw. in das Solarmodul zu führen. Die "Anschlußseite bzw. -fläche" ist insbesondere die Rückseite des Solarmoduls, mittels welcher das Solarmodul beispielsweise befestigt bzw. montiert werden kann.

Um die Solarzelle, wie eingangs beschrieben wurde, vor Beschädigungen zu schützen, sind der Plus- und Minuspol der Solarzelle jeweils mit einem zugeordneten Leiterkontakt der Anschlußdosenkontakteinrichtung kontaktiert. Mittels einer Bypass-Diode, welche die zwei Leiterkontakte der Anschlußdosenkontakteinrichtung miteinander kontaktiert, wird ein Kurzschluß zwischen den beiden Polen erzeugt, wenn die über die Solarzelle abfallende Spannung einen vorbestimmten Grenzwert überschreitet.

Die zumindest eine Anschlußdose ist an der Anschlußseite bzw. -fläche des Solarmoduls befestigt. Die Befestigung der Anschlußdose erfolgt mittels des Anschlußdosenbefestigungselements, wobei das Anschlußdosenbefestigungselement insbesondere dazu ausgelegt sein kann, um vorteilhafterweise in einfacher Weise mit dem Solarmodul verklebt zu sein.

### Bevorzugte Ausführungsformen des Solarpaneels

Vorzugsweise sind zwei elektrische Anschlußdosen voneinander beabstandet an dem Solarmodul befestigt. Weiter bevorzugt fungiert eine erste Anschlußdose als Eingangsanschlußdose und eine zweite Anschlußdose als Ausgangsanschlußdose.

Das Solarmodul umfaßt vorzugsweise zumindest zwei in Reihe geschaltete spannungserzeugende Solarzellen bzw. Solarzellengruppen, wobei jede Solarzelle zwei elektrische Leiter aufweist, die den Plus- und Minuspol der Solarzelle bilden. Folglich umfaßt ein Solarmodul zumindest vier elektrische Leiter. Auf der Anschlußseite können die zumindest vier elektrischen Leiter, insbesondere in Form dünner Leiterbänder, aus dem Solarmodul heraus geführt werden. Um jede Solarzelle zu schützen, sind der Plus- und Minuspol jeder Solarzelle mittels einer Bypass-Diode miteinander verbunden.

Eine Bypass-Diode ist an der Anschlußdosenkontakteinrichtung der Eingangsanschlußdose bzw. der Eingangsanschlußdosenkontakteinrichtung der Eingangsanschlußdose angeordnet und verbindet mittelbar die elektrischen Leiter einer ersten Solarzelle, wobei die elektrischen Leiter mit zwei verschiedenen Leiterkontakten der Eingangsanschlußdosenkontakteinrichtung kontaktiert sind, die lediglich durch die Bypass-Diode miteinander elektrisch verbunden sind. Analog ist eine zweite Bypass-Diode an der Anschlußdosenkontakteinrichtung der Ausgangsanschlußdose bzw. der Ausgangsanschlußdosenkontakteinrichtung der Ausgangsanschlußdose angeordnet und verbindet mittelbar die elektrischen Leiter einer zweiten Solarzelle, wobei die elektrischen Leiter der ersten Solarzelle von den elektrischen Leitern der zweiten Solarzelle verschieden sind. Die Solarzellen sind untereinander elektrisch leitend verbunden, wobei der Minuspol einer Solarzelle mit dem Pluspol einer weiteren Solarzelle verbunden sein kann.

Die Eingangs- und Ausgangsanschlußdose sind an der Anschlußseite bzw. -fläche des Solarmoduls voneinander beabstandet befestigt, insbesondere durch Verkleben.

Der Begriff "beabstandet" insbesondere in Bezug auf die Beabstandung der Eingangs- und Ausgangsanschlußdose beschreibt im Sinne der Erfindung, daß zwischen der Eingangsanschlußdose und der Ausgangsanschlußdose ein lichter Abstand von vorzugsweise mehr als etwa 1 cm, mehr als etwa 5 cm, mehr als etwa 10 cm, mehr als etwa 50 cm und besonders bevorzugt mehr als etwa 1 m besteht. Der Abstand wird durch die Abmessung des Solarmoduls begrenzt.

Die eine Eingangsanschlußdosenkontakteinrichtung und die eine Ausgangsanschlußdosenkontakteinrichtung sind über das Solarmodul miteinander elektrisch verbunden, wobei die Eingangs- und Ausgangsanschlußdosenkontakteinrichtung dadurch definiert sind, daß der elektrische Strom von der Eingangsanschlußdosenkontakteinrichtung in Richtung der Ausgangsanschlußdosenkontakteinrichtung fließt, wenn das Solarpaneel in betriebsmäßigem Gebrauch ist. In anderen Worten können die Eingangsanschlußdose und die Ausgangsanschlußdose die beiden Pole des Solarpaneels bilden, d.h. die Ausgangsanschlußdose kann der Pluspol sein und die Eingangsanschlußdose kann der Minuspol sein, so daß der Strom durch einen an das Solarpaneel angeschlossenen Verbraucher vom Pluspol zum Minuspol fließt. Die Terminologie kann auch umgedreht werden.

Vorteilhafterweise sind die Eingangs- und Ausgangsanschlußdosen einfach zu montieren und können unabhängig voneinander an beliebigen Stellen des Solarmoduls befestigt werden. Dadurch ist es vorteilhafterweise möglich die Eingangsanschlußdose z.B. an einem zur Ausgangsanschlußdose entgegengesetzten Ende des Solarmoduls anzuordnen. Werden mehrere solcher Solarpaneele nebeneinander in einer Solaranlage installiert, kann eine Ausgangsanschlußdose eines ersten Solarpaneels benachbart zu einer Eingangsanschlußdose eines zweiten Solarpaneels angeordnet sein. Dadurch können die Kabelverbindungen zwischen den zwei Solarpaneelen vorteilhafterweise minimiert werden, wodurch sich eine Materialersparnis und eine Erleichterung der Montage der Solaranlage ergibt.

Da genau eine Diode in der Eingangsanschlußdose angeordnet ist und genau eine Diode in der Ausgangsanschlußdose angeordnet ist, wird vorteilhafterweise erreicht, daß die Abwärme der Diode effizient aus der entsprechenden Anschlußdose geleitet werden kann. Somit eine Beschädigung der Diode und/oder Anschlußdose aufgrund übermäßiger Wärme verhindert.

Die Leiterkontakte der Eingangsanschlußdose sind in betriebsmäßigem Gebrauch, d.h., wenn die Eingangsanschlußdose an dem Solarmodul angeordnet ist, voneinander mechanisch und elektrisch getrennte Elemente, die mittels der Diode zumindest elektrisch, insbesondere auch mechanisch, miteinander verbunden sind.

Vorzugsweise umfaßt das Solarpaneel zumindest eine erfindungsgemäße elektrische Überbrückungsdose, wobei zwei der elektrischen Leiter des Solarmoduls jeweils mit einem zugeordneten Leiterkontakt der Überbrückungsdosenkontakteinrichtung kontaktiert sind, und wobei die zumindest eine Überbrückungsdose von der zumindest einen Anschlußdose beabstandet an dem Solarmodul befestigt ist. Vorzugsweise ist die zumindest eine Überbrückungsdose auch von allen Anschlußdosen beabstandet angeordnet.

Das Solarmodul kann auch zumindest drei, d.h. 3, 4, 5, 6, 7, 8, 9, 10, usw. in Reihe geschaltete spannungserzeugende Solarzellen bzw. Solarzellengruppen umfassen, wobei jede Solarzelle zwei elektrische Leiter aufweist, die den Plus- und Minuspol der Solarzelle bilden und die an der Anschlußseite des Solarmoduls aus diesem heraus geführt werden. Folglich umfaßt ein Solarmodul zumindest sechs, d.h. 6, 8, 10, 12, 14, 16, 18, 20, usw. elektrische Leiter, von denen zwei mit der Eingangsanschlußdose verbunden sind und zwei mit der Ausgangsanschlußdose verbunden sind.

Um die weiteren Solarzellen mittels einer Bypass-Diode zu schützen, sind der Plus- und Minuspol einer der weiteren, insbesondere jeder der weiteren, Solarzelle(n) mit jeweils einem Leiterkontakt der Überbrückungsdosenkontakteinrichtung kontaktiert. Die Bypass-Diode ist an der Überbrückungsdosenkontakteinrichtung der Überbrückungsdose angeordnet und verbindet mittelbar deren elektrische Leiter. Folglich ist die Anzahl der Dioden gleich der Anzahl der Dosen, d.h. der Summe aus Eingangsanschlußdose und Ausgangsanschlußdose und Überbrückungsdose(n).

Die Leiterkontakte der Überbrückungsdosenkontakteinrichtung sind insbesondere ausgelegt mit Leiterbändern zu kontaktieren. Mit anderen Worten umfassen die Leiterkontakte insbesondere einen im wesentlichen ebenen Bereich, der ausgelegt ist, im wesentlichen formschlüssig mit einem elektrischen Leiter, insbesondere einem Leiterband, zu kontaktieren. Die Überbrückungsdosen bzw. die Überbrückungsdosenkontakteinrichtung weist über die Leiterkontakte hinaus keine weiteren Kontakte auf, insbesondere keine weiteren Eingänge und/oder Ausgänge bzw. Anschlußpole, um die Überbrückungsdosenkontakteinrichtung mit einer externen Einrichtung elektrisch zu verbinden.

Eine oder mehrere Überbrückungsdose(n) sind an der Anschlußseite des Solarmoduls voneinander und von der Eingangs- und Ausgangsanschlußdose beabstandet befestigt. Insbesondere ist/sind die Überbrückungsdose(n) entlang der Verbindungslinie zwischen der Eingangs- und Ausgangsanschlußdose befestigt. Die Befestigung erfolgt mittels des jeweiligen Überbrückungsdosenbefestigungselements, welches insbesondere dazu ausgelegt sein kann, um mit dem Solarmodul verklebt zu sein.

Vorzugsweise umfaßt das Überbrückungsdosenbefestigungselement ein an der Überbrückungsdosenkontakteinrichtung angeordnetes Haftmittel, wobei die Überbrückungsdosenkontakteinrichtung mittels des Haftmittels an dem Solarmodul befestigt ist.

Insbesondere kann das Überbrückungsdosenbefestigungselement eine Schicht Haftkleber, Schmelzkleber und/oder ein doppelseitiges Klebeband umfassen. Vorteilhafterweise ist die Überbrückungsdose dadurch materialsparend und einfach an dem Solarmodul zu befestigen, da die Überbrückungsdose im wesentlichen grundplattenfrei, d.h. ohne eine Grundplatte bzw. Bodenplatte ausgebildet ist. Aufgrund der geringen mechanischen Belastung der Überbrückungsdose, die insbesondere keine Kabelanschlüsse umfaßt, so daß keine Zugbelastung auftritt, steht eine vereinfachte bzw. schwächere Befestigung der Überbrückungsdose einem sicheren Betrieb nicht entgegen.

Vorzugsweise ist das Innere zumindest einer der Anschlußdosen und/oder zumindest einer der Überbrückungsdosen feuchtigkeitsdichtend mit Kunstharz ausgegossen.

Die Anschlußdose(n), insbesondere die Eingangsanschlußdose und/oder die Ausgangsanschlußdose, und/oder die Überbrückungsdose(n) ist/sind bevorzugt mit einem isolierenden Harz ausgegossen, um die einzelnen Bestandteile fest miteinander zu verbinden und elektrisch voneinander zu isolieren. Vorteilhafterweise ist durch das Ausgießen mit Kunstharz ein besonders guter Schutz vor eindringender Feuchtigkeit, z.B. nach der standardisierten Norm IP67 zu erreichen.

Weiterhin kann das Kunstharz auch dazu dienen, die entsprechende Dose an dem Solarmodul zu befestigen, wenn z.B. das Kunstharz eine chemische Verbindung mit dem Solarmodul eingeht. In diesem Fall kann das Kunstharz als Haftmittel dienen. Dies gilt insbesondere für eine Überbrückungsdose, wenn die Überbrückungsdose grundplattenfrei ausgebildet ist. In diesem Fall kann die Überbrückungsdosenkontakteinrichtung an dem Solarmodul angeordnet werden und die Leiterkontakte mit den Leitern des Solarmoduls kontaktiert werden. Anschließend kann der Überbrückungsdosendeckel angeordnet werden und der somit gebildete Hohlraum mit Kunstharz ausgegossen werden, wodurch eine innige Verbindung zwischen dem Überbrückungsdosendeckel und dem Kunstharz und der Fläche des Solarmoduls herstellbar ist, wobei die Überbrückungsdosenkontakteinrichtung in das Kunstharz eingebettet ist. Somit besteht das Gehäuse der Überbrückungsdose im wesentlichen aus dem Überbrückungsdosendeckel, wobei eine Seite der Überbrückungsdose durch das Solarmodul verschlossen ist.

### Verfahren zum Herstellen eines Solarpaneels gemäß einem Aspekt

Ein Aspekt der Erfindung betrifft ein Verfahren zum Herstellen eines Solarpaneels, umfassend die Schritte:
- Bereitstellen eines Solarmoduls mit zumindest zwei elektrischen Leitern,
- Bereitstellen zumindest einer erfindungsgemäßen elektrischen Anschlußdose,
- Befestigen der Anschlußdose an dem Solarmodul, wobei zwei der elektrischen Leiter des Solarmoduls jeweils mit einem zugeordneten Leiterkontakt der Anschlußdosenkontakteinrichtung durch Erwärmung des Lötmitteldepots verlötet werden.

Das Befestigen der Anschlußdose kann insbesondere mittels eines Klebemittels erfolgen. Das Befestigen kann beispielsweise ein Auftragen, insbesondere ein Aufsprühen eines verformbaren, insbesondere flüssigen Klebers an bzw. auf einer Kontaktfläche der Anschlußdose umfassen, mit welcher die Anschlußdose mit dem Solarmodul in Kontakt tritt. Der Kleber kann beispielsweise die Kontaktfläche vollständig bedecken. Es ist auch möglich, daß der Kleber lediglich an diskreten Punkten bzw. Flächen auf bzw. an der Kontaktfläche aufgetragen ist.

Weiterhin kann das Befestigen der entsprechenden Anschlußdose an dem Solarmodul beinhalten, daß der Kleber seine klebende bzw. haftende Eigenschaft erhält. Der Kleber kann z.B. mit Wärme und/oder mit Licht behandelt werden, wie z.B. mit UV Licht bestrahlt werden.

Die vorangehenden Ausführungen gelten sinngemäß, falls der Kleber an bzw. auf der Kontaktfläche des Solarmoduls angeordnet ist. Der Kleber kann beispielsweise ein sogenannter Zwei-Komponentenkleber sein, wobei eine Komponente an der Anschlußdose angeordnet ist und eine weitere Komponente an dem Solarmodul. Das Befestigen kann somit beinhalten, daß die beiden Komponenten miteinander in Kontakt gebracht werden. Alternativ oder zusätzlich kann das Befestigen auch umfassen, daß eine Schutzfolie von einem Haft- bzw. Klebemittel entfernt wird.

Das Verlöten eines der elektrischen Leiter des Solarmoduls mit einem zugeordneten Leiterkontakt der Anschlußdosenkontakteinrichtung erfolgt durch Anordnen des elektrischen Leiters an dem Leiterkontakt bzw. an dem Lötmitteldepot und Erwärmung des Lötmitteldepots. Das Anordnen und das Erwärmen können zeitgleich oder zeitversetzt, manuell oder automatisch bzw. maschinell erfolgen.

Durch das Erwärmen wird das Lötmitteldepot bzw. das Lötmittel des Lötmitteldepots zumindest partiell aufgeschmolzen, so daß sich das geschmolzene Lötmittel sowohl mit dem elektrischen Leiter als auch mit dem Leiterkontakt verbindet und anschließend durch Abkühlen erstarrt. Bevorzugt ist der Schmelzpunkt des Lötmittels niedriger, als der Schmelzpunkt des Leiterkontaktes und des elektrischen Leiters.

Das Lötmittel ist bevorzugt ein Weichlot mit einer Schmelztemperatur von kleiner als 450°C, insbesondere kleiner als etwa 300°C. Alternativ kann das Lötmittel ein elektrisch leitfähiges thermoplastisches Polymer umfassen, wobei die Schmelztemperatur bevorzugt kleiner als 250°C ist.

Bevorzugt wird der elektrische Leiter an dem Leiterkontakt angeordnet und anschließend mittels einer Wärmequelle, z.B. durch einen Lötkolben, gegen den Leiterkontakt gepreßt und dadurch an diesem gehalten, bis durch die mittelbare Erwärmung des Lötmitteldepots über den erwärmten elektrischen Leiter das Lötmittel geschmolzen ist, so daß der elektrische Leiter und der Leiterkontakt verlötet werden. Vorteilhafterweise ist der elektrische Leiter dadurch besonders einfach, insbesondere automatisiert, mit dem Leiterkontakt zu verlöten.

### Bevorzugte Ausführungsformen des Verfahrens

Bevorzugt umfaßt das Verfahren einen oder mehrere der folgenden Schritte:
- Bereitstellen eines Solarmoduls mit zumindest vier elektrischen Leitern,
- Bereitstellen von zwei erfindungsgemäßen elektrischen Anschlußdosen, wobei eine erste Anschlußdose als Eingangsanschlußdose und eine zweite Anschlußdose als Ausgangsanschlußdose dient,
- Befestigen der Eingangsanschlußdose mittels des Befestigungselements der Eingangsanschlußdose bzw. des Eingangsanschlußdosenbefestigungselements an dem Solarmodul,
- Befestigen der Ausgangsanschlußdose mittels des Befestigungselements der Ausgangsanschlußdose bzw. des Ausgangsanschlußdosenbefestigungselements beabstandet von der Eingangsanschlußdose an dem Solarmodul,
- Verlöten von zwei der elektrischen Leiter des Solarmoduls jeweils mit einem zugeordneten Leiterkontakt der Eingangsanschlußdosenkontakteinrichtung der Eingangsanschlußdose mittels des Lötmitteldepots der Eingangsanschlußdosenkontakteinrichtung,
- Verlöten von zwei der elektrischen Leiter des Solarmoduls jeweils mit einem zugeordneten Leiterkontakt der Ausgangsanschlußdosenkontakteinrichtung der Ausgangsanschlußdose mittels des Lötmitteldepots der Ausgangsanschlußdosenkontakteinrichtung.

Vorzugsweise umfaßt das Verfahren weiter die Schritte:
- Bereitstellen zumindest einer erfindungsgemäßen elektrischen Überbrückungsdose,
- Befestigen der Überbrückungsdose mittels des Überbrückungsdosenbefestigungselements an dem Solarmodul, wobei zwei der elektrischen Leiter des Solarmoduls jeweils mit einem zugeordneten Leiterkontakt der Überbrückungsdosenkontakteinrichtung durch Erwärmung des Lötmitteldepots verlötet werden und
wobei die zumindest eine Überbrückungsdose von der zumindest einen Anschlußdose beabstandet an dem Solarmodul befestigt wird.

Für den Fall, daß das Solarpaneel zwei oder mehr Anschlußdosen aufweist, zum Beispiel eine Eingangsanschlußdose und eine Ausgangsanschlußdose, wird die Überbrückungsdose von jeder Anschlußdose beabstandet an dem Solarmodul befestigt. Das Befestigen der Überbrückungsdose kann ebenfalls insbesondere mittels eines Klebemittels erfolgen, wobei die Ausführen zum "Befestigen" in Zusammenhang mit der Anschlußdose analog gelten.

Vorzugsweise umfaßt das Verfahren die weiteren Schritte:
- Anordnen eines Anschlußdosendeckels an der Anschlußdose und/oder
- Anordnen jeweils eines Überbrückungsdosendeckels an jeder Überbrückungsdose.

Bevorzugt umfaßt das obige Anordnen ebenfalls ein im wesentlichen fluiddichtes, insbesondere wasserdichtes und/oder luftdichtes, Verschließen.

Vorzugsweise umfaßt das Verfahren den weiteren Schritt des Trennens der Anschlußdosenkontakteinrichtung und/oder der zumindest einen Überbrückungsdosenkontakteinrichtung an einer Sollbruchstelle.

Bevorzugt sind die zwei Leiterkontakte der Anschlußdosenkontakteinrichtung und/oder der Überbrückungsdosenkontakteinrichtung in einem ursprünglichen Zustand zusammen einstückig ausgebildet, wobei die Anschlußdosenkontakteinrichtung eine Sollbruchstelle aufweist und/oder die Überbrückungsdosenkontakteinrichtung eine Sollbruchstelle aufweist/aufweisen, um die zwei Leiterkontakte zu dekontaktieren. Vorzugsweise werden die zwei Leiterkontakte vor dem Dekontaktieren derart mit der Diode verlötet, daß die Position der zwei Leiterkontakte zueinander nach dem Dekontaktieren durch die Diode fixiert ist. Durch das Trennen an der Sollbruchstelle erfolgt das Dekontaktieren, wobei sowohl der elektrische als auch der mechanische Kontakt unterbrochen wird.

Das Trennen kann mittels eines Werkzeugs vor oder nach dem Befestigen der Anschluß-/Überbrückungsdosenkontakteinrichtung am dem Solarmodul erfolgen. Bevorzugt kann das Trennen mittels des Anschluß-/Überbrückungsdosendeckels bzw. einer daran angeordneten Trenneinrichtung mit dem Anordnen des Deckels erfolgen. Insbesondere ist es möglich, daß ein Element des Deckels beim Anordnen des Deckels an der entsprechenden Dose die Leiterkontakte an der Sollbruchstelle trennt und/oder an der Position der Sollbruchstelle zwischen den beiden Leiterkontakten angeordnet ist, um ein nachträgliches Kontaktieren der beiden Leiterkontakte zu verhindern.

Vorzugsweise umfaßt das Verfahren den weiteren Schritt des Ausgießens des Inneren der Anschlußdose und/oder der zumindest einen Überbrückungsdose mit Kunstharz durch die Öffnung des entsprechenden Deckels.

Bevorzugt umfaßt das Ausgießen das im wesentlichen fluiddichte, insbesondere wasserdichte und/oder luftdichte, Abdichten bzw. Verschließen des Inneren der Anschlußdose und/oder der Überbrückungsdose. Die Bypass-Dioden und die damit verbunden elektrischen Leiter sind dadurch vorteilhafterweise vor Umwelteinflüssen, insbesondere vor Feuchtigkeit, geschützt. Weiter bevorzugt umfaßt das Ausgießen ebenfalls die Befestigung auf dem Solarmodul.

### Verwendung gemäß einem Aspekt

Ein Aspekt der vorliegenden Erfindung betrifft die Verwendung einer Anschlußdose mit den oben beschriebenen Merkmalen, zur Anordnung an einem Solarmodul als Eingangs- oder Ausgangsanschlußdose. Dabei wird die Anschlußdose an einer Anschlußseite des Solarmoduls angeordnet. Insbesondere kann danach die Anschlußdose mit dem Solarmodul elektrisch verbunden werden. Weiterhin kann die Anschlußdose verwendet werden, um das Solarmodul mit weiteren Solarmodulen oder elektrischen Verbrauchern zu verbinden.

Die Erfindung ist nicht auf die oben beschriebenen Aspekte bzw. Ausführungsformen beschränkt. Vielmehr können einzelne Merkmale der Aspekte und/oder Ausführungsformen beliebig miteinander kombiniert werden und insbesondere somit neue Ausführungsformen gebildet werden. In anderen Worten gelten die obigen Ausführungen zu den einzelnen Merkmalen der Vorrichtung(en) sinngemäß auch für das Verfahren sowie die Verwendung und umgekehrt.

### Figurenbeschreibung

Nachfolgend werden bevorzugte Ausführungsformen der vorliegenden Erfindung anhand der beigefügten Zeichnungen beispielhaft erläutert. Es zeigt:
- Figur 1:: eine perspektivische Ansicht einer bevorzugten Ausführungsform eines Solarpaneels in teilbestücktem Zustand;
- Figur 2:: eine Draufsicht auf eine bevorzugte Ausführungsform des Solarpaneels;
- Figur 3:: eine perspektivische Explosionsansicht einer bevorzugten Ausführungsform einer Eingangsanschlußdose;
- Figur 4:: eine perspektivische Explosionsansicht einer bevorzugten Ausführungsform einer Ausgangsanschlußdose;
- Figur 5:: eine perspektivische Explosionsansicht einer bevorzugten Ausführungsform einer Überbrückungsdose; und
- Figur 6:: eine perspektivische Ansicht einer bevorzugten Ausführungsform einer Überbrückungsdosenkontakteinrichtung.
- Figuren 7A bis 7F:: bevorzugte Ausführungsformen eines Leiterkontaktes mit Lötmitteldepot.

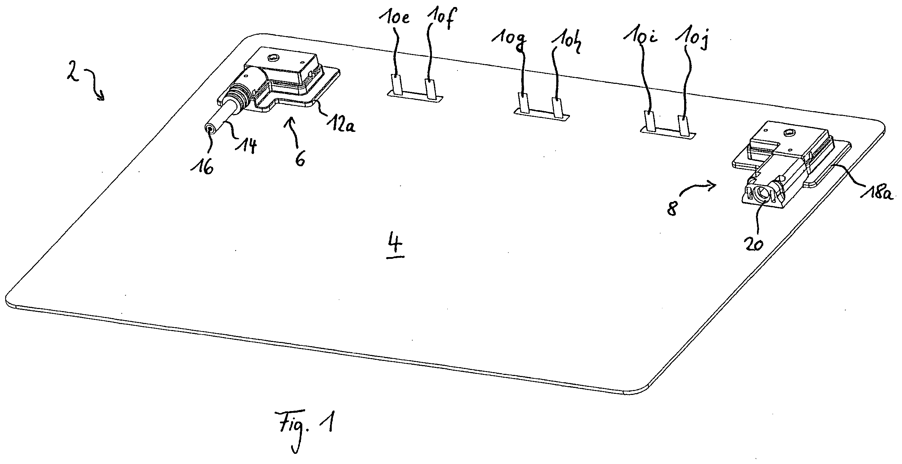

**Figur 1** zeigt eine perspektivische Ansicht einer bevorzugten Ausführungsform eines Solarpaneels 2 in teilbestücktem Zustand. Das gezeigt Solarpaneel 2 umfaßt ein Solarmodul 4, eine als Eingangsanschlußdose 6 ausgebildete Anschlußdose und eine als Ausgangsanschlußdose 8 ausgebildete Anschlußdose. Die jeweiligen Merkmale der zwei unterschiedlichen Anschlußdosen sind dementsprechend durch das Voranstellen der entsprechenden Silben "Eingangs-" und "Ausgangs-" voneinander unterschieden.

Das Solarmodul 4 weist zehn elektrische Leiter 10a - 10j auf, die auf der Anschlußseite des Solarmoduls aus diesem heraus geführt sind. Zwei der elektrischen Leiter 10a, 10b (in Fig.1 nicht sichtbar) sind mit der bereits befestigten Eingangsanschlußdose 6 und zwei der elektrischen Leiter 10c, 10d (in Fig.1 nicht sichtbar) sind mit der bereits befestigten Ausgangsanschlußdose 8 kontaktiert. Sechs weitere elektrischen Leiter 10e - 10j ragen aus dem Solarmodul hervor und sind noch durch Überbrückungsdosen (nicht gezeigt) zu kontaktieren.

Die Eingangsanschlußdose 6 ist in dieser Ausführungsform mit ihrer Eingangsanschlußdosengrundplatte 12a als bevorzugtem Bestandteil des Eingangsanschlußdosenbefestigungselements 12 mit dem Solarmodul 4 verklebt. Die Eingangsanschlußdose 6 weist ein Kabel 14 mit genau einer Leitungsader 16 auf, welches mit der Eingangsanschlußdose 6 fest verbunden ist.

Die Ausgangsanschlußdose 8 ist in dieser Ausführungsform mit ihrer Ausgangsanschlußdosengrundplatte 18a als bevorzugtem Bestandteil des Ausgangsanschlußdosenbefestigungselements 18 mit dem Solarmodul 4 verklebt. Die Ausgangsanschlußdose 8 weist einen Verbinder 20 mit genau einem Anschlußpol auf. Weiterhin kann eine Fixierungsvorrichtung (nicht gezeigt) angeordnet sein, die dazu dient, das Kabel 14 z.B. während der Montage des Solarpaneels 2 und/oder während des Transport des Solarpaneels 2 zu fixieren, so daß verhindert wird, daß ein loses Ende des Kabels 14 das Solarpaneel 2 und/oder andere Gegenstände beschädigt bzw. Personen verletzt.

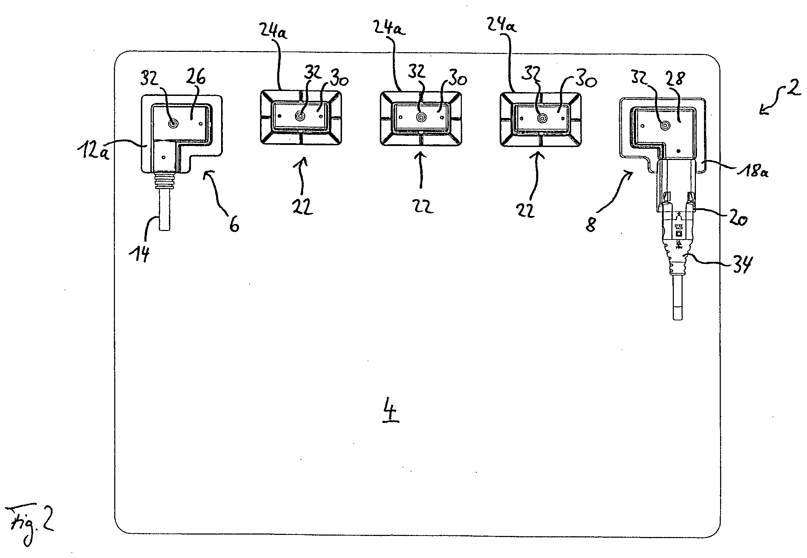

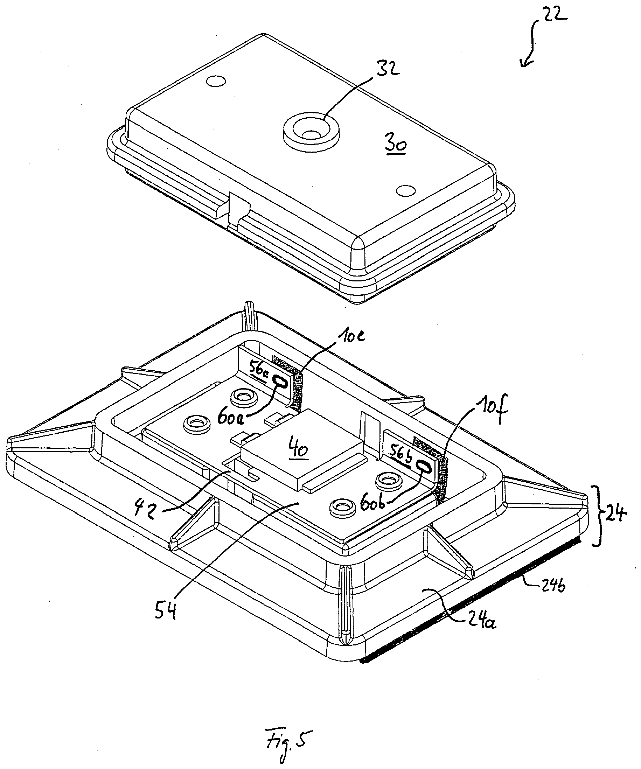

**Figur 2** zeigt eine Draufsicht auf eine bevorzugte Ausführungsform des Solarpaneels 2, mit drei Überbrückungsdosen 22, die jeweils mit ihrer Überbrückungsdosengrundplatte 24a als bevorzugtem Bestandteil des Überbrückungsdosenbefestigungselements 24 mit dem Solarmodul 4 verklebt sind. In den Überbrückungsdosen 22 wurden die elektrischen Leiter 10e - 10j (gezeigt in Figur 1) mit den entsprechenden Leiterkontakten (gezeigt in Figur 5) der Überbrückungsdosen 22 kontaktiert, insbesondere verlötet.

Figur 2 zeigt, daß die Eingangsanschlußdose 6 mittels eines Eingangsanschlußdosendeckels 26, die Ausgangsanschlußdose 8 mittels eines Ausgangsanschlußdosendeckels 28 und die Überbrückungsdosen 22 jeweils mittels eines Überbrückungsdosendeckels 30 verschlossen sind. Der Eingangsanschlußdosendeckel 26 und/oder der Ausgangsanschlußdosendeckel 28 und/oder die Überbrückungsdosendeckel 30 können an dem Solarmodul festgeklebt sein. Weiterhin weisen der Eingangsanschlußdosendeckel 26, der Ausgangsanschlußdosendeckel 28 und die Überbrückungsdosendeckel 30 jeweils eine Einfüllöffnung 32 auf, durch die in einem folgenden Schritt das Innere der Eingangsanschlußdose 6 bzw. der Ausgangsanschlußdose 8 bzw. der Überbrückungsdosen 22 mit Kunstharz ausgegossen wird. Folglich ist es möglich, daß der Eingangsanschlußdosendeckel 26, der Ausgangsanschlußdosendeckel 28 und die Überbrückungsdosendeckel 30 mittels eines Haftmittels, z.B. eines Klebebandes, an dem Solarmodul 2 fixiert werden und anschließend das jeweilige Innere mit dem Kunstharz ausgegossen wird. Durch das Kunstharz wird der Eingangsanschlußdosendeckel 26, der Ausgangsanschlußdosendeckel 28 und die Überbrückungsdosendeckel 30 an der entsprechenden Dose und/oder dem Solarmodul 2 fixiert. Es ist auch möglich, daß der Eingangsanschlußdosendeckel 26 und/oder der Ausgangsanschlußdosendeckel 28 und/oder die Überbrückungsdosendeckel 30 mit einem Werkzeug an der entsprechenden Dose angeordnet und dort gehalten werden, bis das Innere der Dose mit Kunstharz gefüllt ist und das Kunstharz soweit gehärtet ist, daß der Eingangsanschlußdosendeckel 26 und/oder der Ausgangsanschlußdosendeckel 28 und/oder die Überbrückungsdosendeckel 30 an der entsprechenden Dose und/oder dem Solarmodul 2 befestigt ist.

Ferner zeigt Figur 2, daß der Verbinder 20 der Ausgangsanschlußdose 8 durch einen komplementären Verbinder 34 mit der Eingangsanschlußdose eines weiteren Solarpaneels (nicht gezeigt) elektrisch verbunden ist. Mittels dieser elektrischen Verbindung können mehrere Solarpaneele 2 über z.B. eine Reihenschaltung verbunden werden. Alternativ zu der in Figur 2 gezeigten Konfiguration kann die Eingangsanschlußdose 6 anstelle des Kabels 14 auch einen Verbinder 2 aufweisen. Alternativ zu der in Figur 2 gezeigten Konfiguration kann die Ausgangsanschlußdose 8 anstelle des Verbinders 2 auch ein Kabel 14 aufweisen.

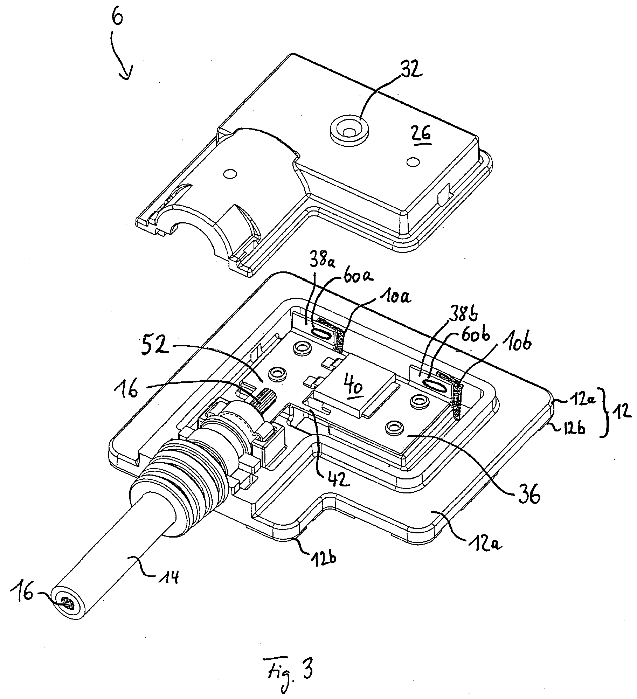

**Figur 3** zeigt eine perspektivische Explosionsansicht einer bevorzugten Ausführungsform der Anschlußdose als Eingangsanschlußdose 6. Die gezeigte elektrische Eingangsanschlußdose 6 umfaßt das Eingangsanschlußdosenbefestigungselement 12 mit einer Eingangsanschlußdosengrundplatte 12a und einem Haftmittel 12b sowie eine Eingangsanschlußdosenkontakteinrichtung 36 mit zwei Leiterkontakten 38a, 38b und einer Diode 40. Die Leiterkontakte 38a, 38b weisen jeweils eine Bohrung auf, in bzw. an welche jeweils ein Lötmitteldepot 60a, 60b befestigt ist, beispielsweise durch Festklemmen oder Festlöten des Lötmittels in der jeweiligen Bohrung. Zwei der elektrischen Leiter 10a, 10b des Solarmoduls 4 sind jeweils mit dem zugeordneten Leiterkontakt 38a, 38b der Eingangsanschlußdosenkontakteinrichtung 36 kontaktiert, insbesondere verlötet, d.h. der elektrische Leiter 10a ist mit dem Leiterkontakt 38a kontaktiert und der elektrische Leiter 10b ist mit dem Leiterkontakt 38b kontaktiert.

Die zwei Leiterkontakte 38a, 38b der Eingangsanschlußdosenkontakteinrichtung 36 sind zusammen einstückig ausgebildet, wobei die Eingangsanschlußdosenkontakteinrichtung 36 eine Sollbruchstelle 42 aufweist, um die zwei Leiterkontakte 38a, 38b vor oder während dem Schließen des Eingangsanschlußdosendeckels 26 zu dekontaktieren. Nach dem Trennen der Sollbruchstelle 42 und vor dem Ausgießen des Inneren der Eingangsanschlußdose 6 sind die zwei Leiterkontakte 38a, 38b lediglich mittels der Diode 40 mechanisch miteinander verbunden. Hierbei ist es möglich, daß die Leiterkontakte 38a, 38b an der Eingangsanschlußdose 6 fixiert sind. Beispielsweise können die Leiterkontakte 38a, 38b an der Eingangsanschlußdose 6 festgeklebt und/oder festgenietet und/oder festgeschweißt und/oder mittels einer mechanischen Verriegelungseinrichtung festgehalten werden.

Die Eingangsanschlußdose 6 in Figur 3 weist ein Kabel 14 mit einer Leitungsader 16 auf, die mit einem als Leitungsaderkontakt ausgebildeten Anschlußkontakt 52 der Eingangsanschlußdosenkontakteinrichtung 36 kontaktiert ist. Ferner weist das Kabel 14 eine Zugentlastung auf, die bereichsweise in einer entsprechend ausgebildeten Aufnahmeeinrichtung der Eingangsanschlußdose 6 angeordnet und dort fixiert ist. Insbesondere kann die Zugentlastung mit der Aufnahmeeinrichtung der Eingangsanschlußdose 6 verklebt sein, so daß das Innere der Eingangsanschlußdose 6 an der Aufnahmevorrichtung gegen die Umwelt feuchtigkeitsdicht abgeschlossen ist.

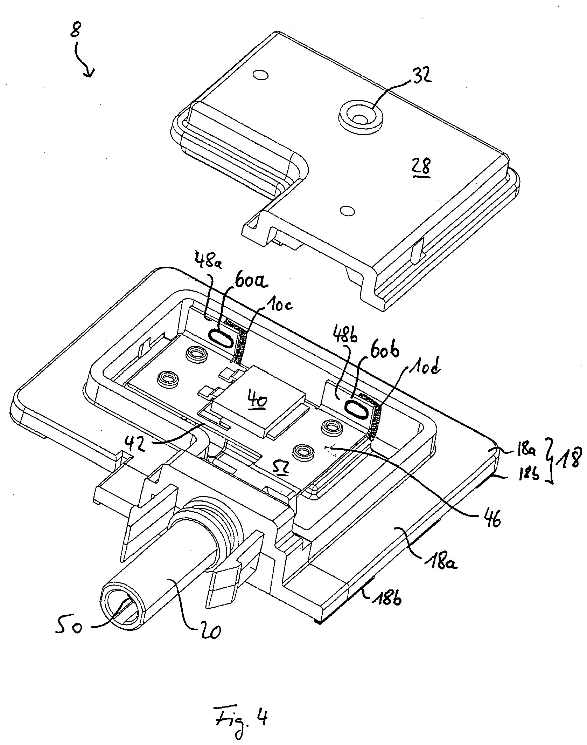

**Figur 4** zeigt eine perspektivische Explosionsansicht einer bevorzugten Ausführungsform der Anschlußdose als Ausgangsanschlußdose 8. Die gezeigte elektrische Ausgangsanschlußdose 8 umfaßt ein Ausgangsanschlußdosenbefestigungselement 18 mit einer Ausgangsanschlußdosengrundplatte 18a und einem Haftmittel 18b und eine Ausgangsanschlußdosenkontakteinrichtung 46 mit zwei Leiterkontakten 48a, 48b und einer Diode 40. Die Leiterkontakte 48a, 48b weisen jeweils eine Bohrung auf, in bzw. an welche jeweils ein Lötmitteldepot 60a, 60b befestigt ist, beispielsweise durch Festklemmen oder Festlöten des Lötmittels in der jeweiligen Bohrung. Zwei der elektrische Leiter 10c, 10d des Solarmoduls 4 sind jeweils mit dem zugeordneten Leiterkontakt 48a, 48b der Ausgangsanschlußdosenkontakteinrichtung 46 kontaktiert, insbesondere verlötet, d.h. der elektrische Leiter 10c ist mit dem Leiterkontakt 48a kontaktiert und der elektrische Leiter 10d ist mit dem Leiterkontakt 48b kontaktiert.

Die zwei Leiterkontakte 48a, 48b der Ausgangsanschlußdosenkontakteinrichtung 46 sind zusammen einstückig ausgebildet, wobei die Ausgangsanschlußdosenkontakteinrichtung 46 eine Sollbruchstelle 42 aufweist, um die zwei Leiterkontakte 48a, 48b vor oder während dem Schließen des Ausgangsanschlußdosendeckels 28 zu dekontaktieren. Nach dem Trennen der Sollbruchstelle 42 und vor dem Ausgießen des Inneren der Ausgangsanschlußdose 8 sind die zwei Leiterkontakte 48a, 48b lediglich mittels der Diode 40 mechanisch miteinander verbunden.

Die Ausgangsanschlußdose 8 in Figur 4 weist einen Verbinder 20 mit einem Anschlußpol 50 auf, der mit einem Anschlußkontakt 52 der Ausgangsanschlußdosenkontakteinrichtung 46 kontaktiert ist. Vorzugsweise sind der Anschlußkontakt 52 der Ausgangsanschlußdosenkontakteinrichtung 46 und der als Leitungsaderkontakt ausgebildete Anschlußkontakt 52 der Eingangsanschlußdosenkontakteinrichtung 36 im wesentlichen identisch ausgebildet.

Es versteht sich jedoch, daß die in der Figur 3 gezeigte Eingangsanschlußdose 6 ebenfalls als Ausgangsanschlußdose 8 dienen kann und umgekehrt, da die Funktion als Eingang bzw. Ausgang lediglich durch die Stromflußrichtung bestimmt wird. Die Eingangsanschlußdose 6 und die Ausgangsanschlußdose 8 können daher auch als Anschlußdosen bezeichnet werden, falls sie nicht in einem Solarpaneel 2 verbaut sind. Weiterhin gelten die zu Figur 3 gemachten Ausführungen in sinngemäßer Weise für Figur 4.

**Figur 5** zeigt eine perspektivische Explosionsansicht einer bevorzugten Ausführungsform der Überbrückungsdose 22. Die gezeigte elektrische Überbrückungsdose 22 umfaßt ein Überbrückungsdosenbefestigungselement 24 mit einer Überbrückungsdosengrundplatte 24a und einem Haftmittel 24b. Weiterhin umfaßt die Überbrückungsdose 22 eine Überbrückungsdosenkontakteinrichtung 54 mit zwei Leiterkontakten 56a, 56b und einer Diode 40. Die Leiterkontakte 56a, 56b weisen jeweils eine Bohrung auf, in bzw. an welche jeweils ein Lötmitteldepot 60a, 60b befestigt ist, beispielsweise durch Festklemmen oder Festlöten des Lötmittels in der jeweiligen Bohrung, so daß das Lötmitteldepot in dieser Ansicht teilweise zu sehen ist. Zwei der elektrischen Leiter 10e, 10f (Leiterbänder) des Solarmoduls 4 sind jeweils mit dem zugeordneten Leiterkontakt 56a, 56b der Überbrückungsdosenkontakteinrichtung 54 kontaktiert, insbesondere verlötet, d.h. der elektrische Leiter 10e ist mit dem Leiterkontakt 56a kontaktiert und der elektrische Leiter 10f ist mit dem Leiterkontakt 56b kontaktiert.

Die zwei Leiterkontakte 56a, 56b der Überbrückungsdosenkontakteinrichtung 54 sind zusammen einstückig ausgebildet, wobei die Überbrückungsdosenkontakteinrichtung 54 eine Sollbruchstelle 42 aufweist, um die zwei Leiterkontakte 56a, 56b vor oder während dem Schließen des Überbrückungsdosendeckels 30 zu dekontaktieren. Nach dem Trennen der Sollbruchstelle 42 und vor dem Ausgießen des Inneren der Überbrückungsdose 22 sind die zwei Leiterkontakte 56a, 56b lediglich mittels der SMD-Diode 40 mechanisch miteinander verbunden.

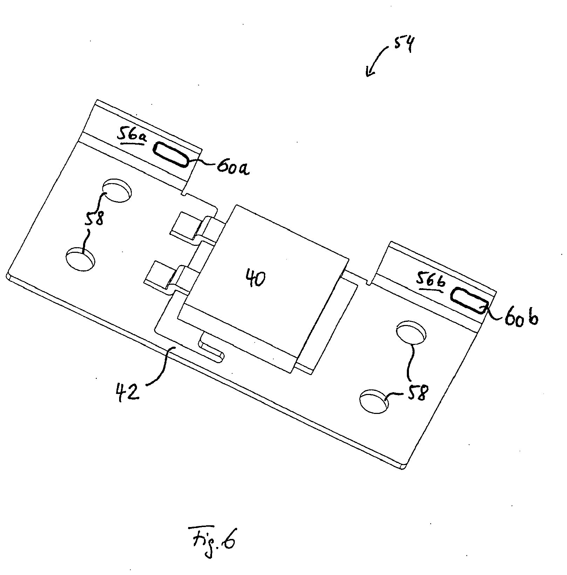

**Figur 6** zeigt eine perspektivische Ansicht der bevorzugten Ausführungsform der Überbrückungsdosenkontakteinrichtung 54 der Überbrückungsdose 22 gemäß Figur 5 mit den zwei Leiterkontakten 56a, 56b, der SMD-Diode 40, den zwei Lötmitteldepots 60a, 60b und der Sollbruchstelle 42. Durch die Sollbruchstelle 42 sind die zwei Leiterkontakte 56a, 56b noch miteinander mechanisch und elektrisch verbunden. Zum betriebsmäßigen Gebrauch wird die Überbrückungsdosenkontakteinrichtung 54 an der Sollbruchstelle 42 in zwei Teile getrennt, so daß die elektrische Verbindung der beiden Teile lediglich über die Diode 40 und gegebenenfalls über eine an die Leiterkontakte 56a, 56b angeschlossene Solarzelle erfolgt.

Weiter weist die Überbrückungsdosenkontakteinrichtung 54 in einem Bodenbereich Befestigungsöffnungen 58 auf, mittels derer die Überbrückungsdosenkontakteinrichtung 54 an dem Solarmodul 4 befestigt werden kann, wenn der Bodenbereich an dem Solarmoduls 4 angeordnet ist. Insbesondere kann auf das Solarmodul 4 und/oder auf die Überbrückungsdosenkontakteinrichtung 54 ein Haftmittel, z.B. ein Klebemittel, ein Thermoplast, usw. aufgetragen werden, so daß das Haftmittel durch die Befestigungsöffnungen 58 dringt und die Überbrückungsdosenkontakteinrichtung 54 hintergreift, wenn die Überbrückungsdosenkontakteinrichtung 54 an dem Solarmodul zum Befestigen angeordnet ist. Alternativ oder zusätzlich könnte das Haftmittel auch auf die dem Solarmodul 4 zugewandten Seite der Überbrückungsdosenkontakteinrichtung 54 angeordnet sein ohne durch die Befestigungsöffnungen 58 zu dringen. Ebenso können die Befestigungsöffnungen 58 dazu dienen, Überbrückungsdosenkontakteinrichtung 54 an dem Solarmodul 4 und/oder an der Überbrückungsdosengrundplatte 24a durch Nieten, Schweißen, Kleben, usw. zu befestigen.

Ansonsten kann die Überbrückungsdosenkontakteinrichtung 54 im wesentlichen identisch zu der Anschlußdosenkontakteinrichtung bzw. Eingangsanschlußdosenkontakteinrichtung 36 bzw. der Ausgangsanschlußdosenkontakteinrichtung 46 ausgebildet sein.

Alternativ zu der in Figur 5 gezeigten Ausführungsform der Überbrückungsdose 22 kann in einer weiteren Ausführungsform die Überbrückungsdose 22 aus der Überbrückungsdosenkontakteinrichtung 54 und aus dem Überbrückungsdosendeckel 30 und gegebenenfalls einem Befestigungsmittel zum Befestigen der Überbrückungsdosenkontakteinrichtung 54 an dem Überbrückungsdosendeckel 30 (oder umgekehrt) und/oder an dem Solarmodul 4 bestehen. Folglich wird die Überbrückungsdose 22 erst dann zusammengesetzt, wenn die Überbrückungsdosenkontakteinrichtung 54 und der Überbrückungsdosendeckel 30 an dem Solarmodul 4 angeordnet sind. In dieser Ausführungsform kann die Überbrückungsdose 22 weiterhin ein oder mehrere Haftmittel, wie z.B. einen Kleber, ein Klebeband, usw. und/oder ein oder mehrere Befestigungsmittel, insbesondere Schrauben, Nieten, Schnappverschlüsse, Hinterschneidungen, Haken, Ösen, usw. zum Befestigen des Überbrückungsdosendeckels 30 an dem Solarmodul 4 und/oder zum Befestigen des Überbrückungsdosendeckels 30 an der Überbrückungsdosenkontakteinrichtung 54 und/oder zum Befestigen der Überbrückungsdosenkontakteinrichtung 54 an dem Solarmodul 4 umfassen.

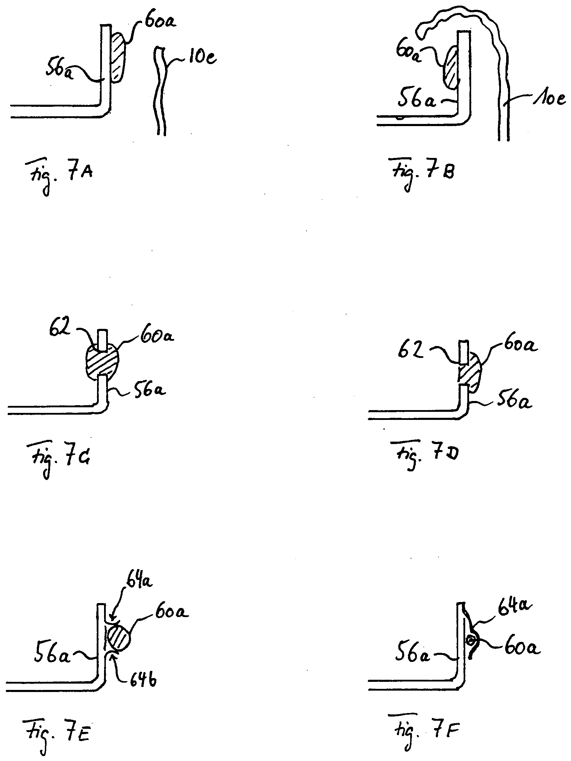

Die **Figuren 7A bis 7F** zeigen beispielhafte bevorzugte Ausführungsformen eines Leiterkontaktes 56a mit Lötmitteldepot 60a. Es versteht sich, daß diese beispielhaften bevorzugten Ausführungsformen des Leiterkontaktes 56a sowohl in einer Überbrückungsdose 22 als auch in einer der voranstehend beschriebenen Anschlußdosen 6,8 verwendet werden können. Somit können die gezeigten Leiterkontakte 56a auch mit den Bezugszeichen 38a oder 48a bezeichnet sein.

Das in den Figuren 7A und 7B gezeigte Lötmitteldepot 60a ist mittels einer adhäsiven Verbindung an dem Leiterkontakt 56a befestigt, insbesondere an diesem festgelötet. Wie in der Figur 7A gezeigt, kann ein elektrischer Leiter 10e durch Andrücken an das Lötmitteldepot 60a und Erwärmen mit dem Leiterkontakt 56a verlötet werden. Im Gegensatz zur Figur 7A ist das Lötmitteldepot 60a in der Figur 7B an einer dem Bodenbereich der Überbrückungsdosenkontakteinrichtung zugewandten Seite des Leiterkontaktes 56a angeordnet, so daß der elektrische Leiter 10e gebogen werden muß, um an dem Lötmitteldepot 60a angeordnet und verlötet zu werden.

Das in den Figuren 7C und 7D gezeigte Lötmitteldepot 60a ist mittels einer durchgängigen Bohrung 62 an dem Leiterkontakt 56a befestigt. Wie in der Figur 7C gezeigt, kann das Lötmittel - ähnlich wie ein Niet - auf beiden Seiten der Bohrung 62 mit dem Leiterkontakt 56a in Eingriff stehen. Vorteilhafterweise kann ein elektrischer Leiter 10e von beiden Seiten des Leiterkontaktes 56a mit diesem verlötet werden. Im Gegensatz zur Figur 7C ist das Lötmitteldepot 60a derart in die Bohrung 62 eingepreßt bzw. eingefüllt, daß das Lötmitteldepot 60a lediglich an einer Seite des Leiterkontaktes 56a aus der Bohrung 62 vorsteht, so daß vorteilhafterweise weniger Lötmittel zur Ausbildung des Lötmitteldepot 60a benötigt wird.

Wie in den Figuren 7E und 7F gezeigt, kann das Lötmitteldepot 60a alternativ oder zusätzlich zur einer adhäsiven Befestigung auch an dem Leiterkontakt 56a festgeklemmt sein, beispielsweise durch das Einklemmen des Lötmitteldepots 60a zwischen zwei Haltebereichen 64a, 64b des Leiterkontaktes 56a. Bevorzugt ist zumindest einer dieser Haltebereiche 64a biegsam ausgeführt, um das Lötmitteldepot 60a festzulegen. Weiter bevorzugt ist zumindest einer der Haltebereiche 64a rückstellfähig ausgebildet, so daß der Haltebereich 64a beim Anbringen des Lötmitteldepots 60a in festem Zustand elastisch verformt wird und eine Haltekraft auf das Lötmitteldepot 60a ausübt, wenn das Lötmitteldepot 60a an dem Leiterkontakt 56a festgelegt ist.

### Bezugszeichenliste

- 2: Solarpaneel
- 4: Solarmodul
- 6: Eingangsanschlußdose
- 8: Ausgangsanschlußdose
- 10a-10j: elektrische Leiter
- 12: Eingangsanschlußdosenbefestigungselement
- 12a: Eingangsanschlußdosengrundplatte
- 12b: Haftmittel
- 14: Kabel
- 16: Leitungsader
- 18: Ausgangsanschlußdosenbefestigungselement
- 18a: Ausgangsanschlußdosengrundplatte
- 18b: Haftmittel
- 20: Verbinder
- 22: Überbrückungsdose
- 24: Überbrückungsdosenbefestigungselement
- 24a: Überbrückungsdosengrundplatte
- 24b: Haftmittel
- 26: Eingangsanschlußdosendeckel
- 28: Ausgangsanschlußdosendeckel
- 30: Überbrückungsdosendeckel
- 32: Einfüllöffnung
- 34: komplementärer Verbinder
- 36: Eingangsanschlußdosenkontakteinrichtung
- 38a, 38b: Leiterkontakt
- 40: Diode
- 42: Sollbruchstelle
- 46: Ausgangsanschlußdosenkontakteinrichtung
- 48a, 48b: Leiterkontakt
- 50: Anschlußpol
- 52: Anschlußkontakt
- 54: Überbrückungsdosenkontakteinrichtung
- 56a, 56b: Leiterkontakt
- 58: Befestigungsöffnung
- 60a, 60b: Lötmitteldepot
- 62: Bohrung
- 64a, 64b: Haltebereich

## Patentansprüche

1. Anschlußdose (6; 8) für ein Solarmodul (4), umfassend:
- ein Anschlußdosenbefestigungselement (12, 18),
- zumindest einen Verbinder (20) mit einem Anschlußpol (50) oder zumindest ein mit der Anschlußdose (6; 8) verbundenes Kabel (14) mit zumindest einer Leitungsader (16),
- zumindest eine Anschlußdosenkontakteinrichtung (36; 46) mit
-- zumindest zwei Leiterkontakten (38a, 38b; 48a, 48b),
-- zumindest einer Diode (40), welche zwei der Leiterkontakte (38a, 38b; 48a, 48b) elektrisch verbindet und
-- zumindest einem Anschlußkontakt (52), der mit dem Anschlußpol (50) oder der zumindest einen Leitungsader (16) kontaktiert ist,
wobei zumindest einer der zumindest zwei Leiterkontakte (38a, 38b; 48a, 48b) ein Lötmitteldepot (60a, 60b) aufweist, wodurch der zumindest eine der zumindest zwei Leiterkontakte (38a, 38b, 48a, 48b) mit einem zugeordneten elektrischen Leiter (10a, 10b) des Solarmoduls (4) elektrisch und mechanisch verbindbar ist;
und wobei die Anschlußdose (6; 8)
- genau einen Verbinder (20) mit einem Anschlußpol (50) oder genau ein mit der Anschlußdose (6; 8) verbundenes Kabel (14) mit genau einer Leitungsader (16) umfaßt und
- genau eine Anschlußdosenkontakteinrichtung (36; 46) mit
-- genau zwei Leiterkontakten (38a, 38b; 48a, 48b),
-- genau einem Anschlußkontakt (52), der mit dem einen Anschlußpol (50) oder der einen Leitungsader (16) kontaktiert ist, und
-- einer Diode (40), welche die zwei Leiterkontakte (38a, 38b; 48a, 48b) elektrisch verbindet,
umfaßt.

2. Anschlußdose (6; 8) nach einem der vorherigen Ansprüche, wobei zwei Leiterkontakte (38a, 38b; 48a, 48b) der zumindest einen Anschlußdosenkontakteinrichtung (36; 46) mittels der Diode (40) mechanisch miteinander verbunden sind und
wobei insbesondere die zumindest zwei Leiterkontakte (38a, 38b; 48a, 48b) der zumindest einen Anschlußdosenkontakteinrichtung (36; 46) einstückig ausgebildet sind und die zumindest eine Anschlußdosenkontakteinrichtung (36; 46) eine Sollbruchstelle (42) aufweist, um die zwei Leiterkontakte (38a, 38b; 48a, 48b) zu dekontaktieren.

3. Anschlußdose (6; 8) nach einem der vorherigen Ansprüche, wobei der Anschlußkontakt (52) der Anschlußdosenkontakteinrichtung (36; 46) mit einem der Leiterkontakte (38a, 38b; 48a, 48b) einstückig ausgebildet ist.

4. Überbrückungsdose (22) für ein Solarmodul (4), umfassend:
- ein Überbrückungsdosenbefestigungselement (24),
- eine Überbrückungsdosenkontakteinrichtung (54) mit
-- zwei Leiterkontakten (56a, 56b) und
-- zumindest einer Diode (40), welche die zwei Leiterkontakte (56a, 56b) elektrisch verbindet,
wobei zumindest einer der Leiterkontakte (56a, 56b) ein Lötmitteldepot (60a, 60b) aufweist, wodurch der zumindest eine der zumindest zwei Leiterkontakte (56a, 56b) mit einem zugeordneten elektrischen Leiter (10e, 10f) des Solarmoduls (4) elektrisch und mechanisch verbindbar ist;
wobei die zwei Leiterkontakte (56a, 56b) der Überbrückungsdosenkontakteinrichtung (54) mittels der Diode (40) mechanisch miteinander verbunden sind; und
wobei die zwei Leiterkontakte (56a, 56b) der Überbrückungsdosenkontakteinrichtung (54) einstückig ausgebildet sind und die Überbrückungsdosenkontakteinrichtung (54) eine Sollbruchstelle (42) aufweist, um die zwei Leiterkontakte (56a, 56b) zu dekontaktieren.

5. Überbrückungsdose (22) nach Anspruch 4, wobei das Überbrückungsdosenbefestigungselement (24) ein an der Überbrückungsdosenkontakteinrichtung (54) direkt angeordnetes Haftmittel umfaßt und wobei die Überbrückungsdosenkontakteinrichtung (54) mittels des Haftmittels an einem Solarmodul (4) befestigbar ist.

6. Solarpaneel (2), umfassend:
- ein Solarmodul (4) mit zumindest zwei elektrischen Leitern (10a, 10b),
- zumindest eine elektrische Anschlußdose (6; 8) gemäß zumindest einem der Ansprüche 1 bis 3,
wobei zwei der elektrischen Leiter (10a, 10b) des Solarmoduls (4) jeweils mit einem zugeordneten Leiterkontakt (38a, 38b; 48a, 48b) der Anschlußdosenkontakteinrichtung (36; 46) mittels des Lötmitteldepots (60a, 60b) verlötet sind; und wobei zwei elektrische Anschlußdosen (6; 8) voneinander beabstandet an dem Solarmodul (4) befestigt sind.

7. Solarpaneel (2) nach Anspruch 6, mit zumindest einer elektrischen Überbrükkungsdose (22) gemäß zumindest einem der Ansprüche 4 oder 5,
wobei zwei der elektrischen Leiter (10e, 10f) des Solarmoduls (4) jeweils mit einem zugeordneten Leiterkontakt (56a, 56b) der Überbrückungsdosenkontakteinrichtung (54) kontaktiert sind, und
wobei die zumindest eine Überbrückungsdose (22) von der zumindest einen Anschlußdose (6; 8) beabstandet an dem Solarmodul (4) befestigt ist und wobei insbesondere das Überbrückungsdosenbefestigungselement (24) ein an der Überbrückungsdosenkontakteinrichtung (54) angeordnetes Haftmittel umfaßt und die Überbrückungsdosenkontakteinrichtung (54) mittels des Haftmittels an dem Solarmodul (4) befestigt ist.

8. Solarpaneel (2) nach einem der Ansprüche 6 bis 7, wobei das Innere zumindest einer der Anschlußdosen (6; 8) und/oder zumindest einer der Überbrükkungsdosen (22) feuchtigkeitsdichtend mit Kunstharz ausgegossen ist.

9. Solarpaneel (2) nach einem der Ansprüche 6 bis 8, wobei das Lötmitteldepot (60a, 60b) der Anschlußdose (6; 8) und/oder der Überbrückungsdose (22) mittels einer adhäsiven Verbindung an dem Leiterkontakt (38a, 38b; 48a, 48b; 56a, 56b) befestigt ist.

10. Solarpaneel (2) nach einem der Ansprüche 6 bis 9, wobei die Diode (40) der Anschlußdose (6; 8) und/oder der Überbrückungsdose (22) eine SMD-Diode ist.

11. Verfahren zum Herstellen eines Solarpaneels (2), umfassend die Schritte:
- Bereitstellen eines Solarmoduls (4) mit zumindest zwei elektrischen Leitern (10a, 10b),
- Bereitstellen zumindest einer elektrischen Anschlußdose (6; 8) gemäß zumindest einem der Ansprüche 1 bis 3,
- Befestigen der Anschlußdose (6; 8) an dem Solarmodul (4), wobei zwei der elektrischen Leiter (10a, 10b) des Solarmoduls (4) jeweils mit einem zugeordneten Leiterkontakt (38a, 38b; 48a, 48b) der Anschlußdosenkontakteinrichtung (36; 46) durch Erwärmung des Lötmitteldepots (60a, 60b) verlötet werden.

12. Verfahren nach Anspruch 11, weiter umfassend die Schritte:
- Bereitstellen zumindest einer elektrischen Überbrückungsdose (22), gemäß zumindest einem der Ansprüche 4 bis 5,
- Befestigen der Überbrückungsdose (22) mittels des Überbrückungsdosenbefestigungselements (24) an dem Solarmodul (4), wobei zwei der elektrischen Leiter (10e, 10f) des Solarmoduls (4) jeweils mit einem zugeordneten Leiterkontakt (56a, 56b) der Überbrückungsdosenkontakteinrichtung (54) durch Erwärmung des Lötmitteldepots (60a, 60b) verlötet werden und
wobei die zumindest eine Überbrückungsdose (22) von der zumindest einen Anschlußdose (6; 8) beabstandet an dem Solarmodul (4) befestigt wird.

## Claims

1. A connection socket (6; 8) for a solar module (4), comprising:
- a connection socket fastening element (12, 18),
- at least one connector (20) with a connecting pole (50), or at least one cable (14) that is connected to the connection socket (6; 8) and has at least one cable core (16),
- at least one connection socket contacting apparatus (36; 46) with
-- at least two conductor contacts (38a, 38b; 48a, 48b),
-- at least one diode (40) that electrically connects two of the conductor contacts (38a, 38b; 48a, 48b), and
-- at least one connection contact (52) that is contacted by the connection pole (50) or the at least one cable core (16),
wherein at least one of the at least two conductor contacts (38a, 38b; 48a, 48b) has a soldering agent deposit (60a, 60b), whereby the at least one of the at least two conductor contacts (38a, 38b, 48a, 48b) can be electrically and mechanically connected with an associated electrical conductor (10a, 10b) of the solar module (4);
and wherein the connection socket (6; 8) comprises
- precisely one connector (20) with a connecting pole (50), or precisely one cable (14) that is connected to the connection socket (6; 8) and has precisely one cable core (16), and
- precisely one connection socket contacting apparatus (36; 46) with
-- precisely two conductor contacts (38a, 38b; 48a, 48b),
-- precisely one connection contact (52) that is contacted by the one connection pole (50) or the one cable core (16), and
-- one diode (40) that electrically connects the two conductor contacts (38a, 38b; 48a, 48b).

2. The connection socket (6; 8) according to one of the preceding claims, wherein two conductor contacts (38a, 38b; 48a, 48b) of the at least one connection socket contacting apparatus (36; 46) are mechanically connected to each other by means of the diode (40), and
wherein in particular the at least two conductor contacts (38a, 38b; 48a, 48b) of the at least one connection socket contacting apparatus (36; 46) is designed as a single part, and the at least one connection socket contacting apparatus (36; 46) has a predetermined breaking point (42) in order to separate the two conductor contacts (38a, 38b; 48a, 48b).

3. The connection socket (6; 8) according to one of the preceding claims, wherein the connection contact (52) of the connection socket contacting apparatus (36; 46) is designed as a single part with one of the conductor contacts (38a, 38b; 48a, 48b).

4. A bridge socket (22) for a solar module (4), comprising:
- a bridge socket fastening element (24),
- a bridge socket contacting apparatus (54) with
-- two conductor contacts (56a, 56b) and
-- at least one diode (40) that electrically connects the two conductor contacts (56a, 56b),
wherein at least one of the conductor contacts (56a, 56b) has a soldering agent deposit (60a, 60b), whereby the at least one of the at least two conductor contacts (56a, 56b) can be electrically and mechanically connected with an associated electrical conductor (10e, 10f) of the solar module (4);
wherein the two conductor contacts (56a, 56b) of the bridge socket contacting apparatus (54) can be mechanically connected to each other by means of the diode (40); and wherein the two conductor contacts (56a, 56b) of the bridge socket contacting apparatus (54) are designed as a single part, and the bridge socket contacting apparatus (54) has a predetermined breaking point (42) for separating the two conductor contacts (56a, 56b).

5. The bridge socket (22) according to claim 4, wherein the bridge socket fastening element (24) comprises an adhesive agent which is directly arranged on the bridge socket contacting apparatus (54), and wherein the bridge socket contacting apparatus (54) can be fastened to a solar module (4) by means of the adhesive agent.

6. A solar panel (2) comprising:
- a solar module (4) with at least two electrical conductors (10a, 10b),
- at least one electrical connection socket (6; 8) according to at least one of claims 1 to 3,
wherein two of the electrical conductors (10a, 10b) of the solar module (4) are soldered in each case to one associated conductor contact (38a, 38b; 48a, 48b) of the connection socket contacting apparatus (36; 46) by means of the soldering agent deposit (60a, 60b); and
wherein two electrical connection sockets (6; 8) are fastened to the solar module (4) at a distance from each other.

7. The solar panel (2) according to claim 6, with at least one electrical bridge socket (22) according to at least one of claims 4 or 5,
wherein two of the electrical conductors (10e, 10f) of the solar module (4) are contacted in each case with one associated conductor contact (56a, 56b) of the bridge socket contacting apparatus (54), and
wherein the at least one bridge socket (22) is fastened to the solar module (4) at a distance from the at least one connection socket (6; 8), and
wherein in particular the bridge socket fastening element (24) comprises an adhesive agent arranged on the bridge socket contacting apparatus (54), and the bridge socket contacting apparatus (54) is fastened to the solar module (4) by means of the adhesive agent.

8. The solar panel (2) according to one of claims 6 to 7, wherein the inside of at least one of the connection sockets (6; 8) and/or at least one of the bridge sockets (22) is cast from artificial resin to seal against moisture.

9. The solar panel (2) according to one of claims 6 to 8, wherein the soldering agent deposit (60a, 60b) of the connection socket (6; 8) and/or the bridge socket (22) is fastened by means of an adhesive connection to the conductor contact (38a, 38b; 48a, 48b; 56a, 56b).

10. The solar panel (2) according to one of claims 6 to 9, wherein the diode (40) of the connection socket (6; 8) and/or the bridge socket (22) is an SMD diode.

11. A method to produce a solar panel (2) comprising the steps:
- provide a solar module (4) with at least two electrical conductors (10a, 10b),
- provide at least one electrical connection socket (6; 8) according to at least one of claims 1 to 3,
- fasten the connection socket (6; 8) to the solar module (4), wherein two of the electrical conductors (10a, 10b) of the solar module (4) are soldered in each case to one associated conductor contact (38a, 38b; 48a, 48b) of the connection socket contacting apparatus (36; 46) by heating the soldering agent deposit (60a, 60b).

12. The method according to claim 11, moreover comprising the steps:
- provide at least one electrical bridge socket (22) according to at least one of claims 4 to 5,
- fasten the bridge socket (22) to the solar module (4) by means of the bridge socket fastening elements (24), wherein two of the electrical conductors (10e, 10f) of the solar module (4) are soldered in each case to one associated conductor contact (56a, 56b) of the bridge socket contacting apparatus (54) by heating the soldering agent deposit (60a, 60b), and
wherein the at least one bridge socket (22) is fastened to the solar module (4) at a distance from the at least one connection socket (6; 8).

## Revendications

1. Boîte de jonction (6; 8) pour un module solaire (4), comportant :
- un élément de fixation de la boîte de jonction (12, 18),
- au moins un connecteur (20) avec une borne de connexion (50) ou au moins un câble (14) relié à la boîte de jonction (6; 8) avec au moins une âme de câble (16),
- au moins un dispositif de contact de la boîte de jonction (36; 46) avec
-- au moins deux contacts conducteurs (38a, 38b; 48a, 48b),
-- au moins une diode (40), laquelle relie électriquement deux des contacts conducteurs (38a, 38b; 48a, 48b) et
-- au moins un contact de connexion (52) qui est mis en contact avec la borne de connexion (50) ou ladite au moins une âme de câble (16),
où au moins un des au moins deux contacts conducteurs (38a, 38b; 48a, 48b) présente un dépôt de soudure (60a, 60b), grâce à quoi ledit au moins un des au moins deux contacts conducteurs (38a, 38b; 48a, 48b) est susceptible d'être relié électriquement et mécaniquement à un conducteur électrique associé (10a, 10b) du module solaire (4) ;
et où la boîte de jonction (6; 8) comporte
- exactement un connecteur (20) avec une borne de connexion (50) ou exactement un câble (14) relié à la boîte de jonction (6; 8) avec exactement une âme de câble (16) et
- exactement un dispositif de contact de la boîte de jonction (36; 46) avec
-- exactement deux contacts conducteurs (38a, 38b; 48a, 48b),
-- exactement un contact de connexion (52) lequel est mis en contact avec ladite borne de connexion (50) ou ladite âme de câble (16), et
- une diode (40), laquelle relie électriquement les deux contacts conducteurs (38a, 38b; 48a, 48b).

2. Boîte de jonction (6; 8) selon l'une quelconque des revendications précédentes, où deux contacts conducteurs (38a, 38b; 48a, 48b) dudit au moins un dispositif de contact de la boîte de jonction (36; 46) sont reliés mécaniquement l'un à l'autre à l'aide de la diode (40) et
où, en particuliers, les au moins deux contacts conducteurs (38a, 38b; 48a, 48b) dudit au moins un dispositif de contact de la boîte de jonction (36; 46) sont conçus d'une seule pièce et le au moins un dispositif de contact de la boîte de jonction (36; 46) présente un point de rupture (42) afin de ne pas mettre en contact les deux contacts conducteurs (38a, 38b; 48a, 48b).

3. Boîte de jonction (6; 8) selon l'une quelconque des revendications précédentes, où le contact de connexion (52) du dispositif de contact de la boîte de jonction (36; 46) est conçu d'une seule pièce avec un des contacts conducteurs (38a, 38b; 48a, 48b).

4. Boîtier intermédiaire (22) pour un module solaire (4), comportant :
- un élément de fixation de boîtier intermédiaire (24),
- un dispositif de contact de boîtier intermédiaire (54) avec
-- deux contacts conducteurs (56a, 56b) et
-- au moins une diode (40), laquelle relie électriquement les deux contacts conducteurs (56a, 56b),
où au moins un des contacts conducteurs (56a, 56b) présente un dépôt de soudure (60a, 60b), grâce à quoi ledit au moins un des au moins deux contacts conducteurs (56a, 56b) est susceptible d'être relié électriquement et mécaniquement à un conducteur électrique associé (10e, 10f) du module solaire (4) ;
où les deux contacts conducteurs (56a, 56b) du dispositif de contact de boîtier intermédiaire (54) sont reliés mécaniquement l'un à l'autre à l'aide de la diode (40) ; et où les deux contacts conducteurs (56a, 56b) du dispositif de contact de boîtier intermédiaire (54) sont conçus d'une seule pièce et le dispositif de contact de boîtier intermédiaire (54) présente un point de rupture (42) afin de ne pas mettre en contact les deux contacts conducteurs (56a, 56b).

5. Boîtier intermédiaire (22) selon la revendication 4, où l'élément de fixation du boîtier intermédiaire (24) comporte un moyen adhésif directement agencé sur le dispositif de contact de boîtier intermédiaire (54) et où le dispositif de contact de boîtier intermédiaire (54) est susceptible d'être fixé à l'aide du moyen adhésif sur un module solaire (4).

6. Panneau solaire (2), comportant :
- un module solaire (4) avec au moins deux conducteurs électriques (10a, 10b),
- au moins une boîte de jonction électrique (6; 8) selon au moins une des revendications de 1 à 3,
où deux des conducteurs électriques (10a, 10b) du module solaire (4) sont soudés respectivement avec un contact conducteur associé (38a, 38b; 48a, 48b) du dispositif de contact de la boîte de jonction (36; 46) à l'aide du dépôt de soudage (60a, 60b) ;
et où deux boîtes de jonction électriques (6; 8) sont fixées, espacées l'une de l'autre, sur le module solaire (4).

7. Panneau solaire (2) selon la revendication 6 avec au moins un boîtier intermédiaire électrique (22) selon au moins une des revendications de 4 à 5,
où deux des conducteurs électriques (10e, 10f) du module solaire (4) sont mis en contacts respectivement avec un contact conducteurs associé (56a, 56b) du dispositif de contact de boîtier intermédiaire (54), et
où ledit au moins un boîtier intermédiaire (22) est fixé, espacé de ladite au moins une boîte de jonction (6; 8), sur le module solaire (4) et
où, en particulier, l'élément de fixation de boîtier intermédiaire (24) comporte un moyen adhésif agencé sur le dispositif de contact de boîtier intermédiaire (54) et le dispositif de contact de boîtier intermédiaire (54) est fixé à l'aide du moyen adhésif sur le module solaire (4).

8. Panneau solaire (2) selon une des revendications de 6 à 7, où l'intérieur d'au moins une des boîtes de jonction (6; 8) et/ou d'au moins un des boîtiers intermédiaires (22) est scellé avec une résine synthétique de sorte à être étanche à l'humidité.

9. Panneau solaire (2) selon une des revendications de 6 à 8, où le dépôt de soudure (60a, 60b) de la boîte de jonction (6; 8) et/ou du boîtier intermédiaire (22) est fixé à l'aide d'une liaison adhésive sur le contact conducteur (38a, 38b; 48a, 48b; 56a, 56b).

10. Panneau solaire (2) selon une des revendications de 6 à 9, où la diode (40) de la boîte de jonction (6; 8) et/ou du boîtier intermédiaire (22) est une diode CMS.

11. Procédé de production d'un panneau solaire (2), comportant les étapes :
- mise à disposition d'un module solaire (4) avec au moins deux conducteurs électriques (10a, 10b),
- mise à disposition d'au moins une boîte de jonction électrique (6; 8) selon au moins une des revendications de 1 à 3,
- fixation de la boîte de jonction (6; 8) sur le module solaire (4), où deux des conducteurs électriques (10a, 10b) du module solaire (4) sont soudés respectivement avec un contact conducteur associé (38a, 38b; 48a, 48b) du dispositif de contact de la boîte de jonction (36; 46) par le réchauffement du dépôt de soudure (60a, 60b).

12. Procédé selon la revendication 11, comportant en outre les étapes :
- mise à disposition d'au moins un boîtier intermédiaire électrique (22), selon au moins une des revendications de 4 à 5,
- fixation du boîtier intermédiaire (22) à l'aide de l'élément de fixation de boîtier intermédiaire (24) sur le module solaire (4), où deux des conducteurs électriques (10e, 10f) du module solaire (4) sont soudés respectivement avec un contact conducteur associé (56a, 56b) du dispositif de contact de boîtier intermédiaire (54) par le réchauffement du dépôt de soudure (60a, 60b) et
où le au moins un boîtier intermédiaire (22) est fixé espacé dudit au moins une boîte de jonction (6; 8) sur le module solaire (4).
